(19) Europäisches Patentamt / European Patent Office / Office européen des brevets

(11) **EP 3 602 229 B1**

(12) **EUROPÄISCHE PATENTSCHRIFT**

(45) Veröffentlichungstag und Bekanntmachung des Hinweises auf die Patenterteilung:
**05.05.2021 Patentblatt 2021/18**

(21) Anmeldenummer: **18703577.9**

(22) Anmeldetag: **05.02.2018**

(51) Int Cl.:
**G05B 15/02** *(2006.01)*    **G05D 23/19** *(2006.01)*

(86) Internationale Anmeldenummer:
**PCT/EP2018/052796**

(87) Internationale Veröffentlichungsnummer:
**WO 2018/171969 (27.09.2018 Gazette 2018/39)**

(54) **VERFAHREN UND VORRICHTUNG ZUM INTERNETGESTÜTZTEN OPTIMIEREN VON PARAMETERN EINER HEIZUNGSREGELUNG**

METHOD AND DEVICE FOR INTERNET-SUPPORTED OPTIMIZATION OF THE PARAMETERS OF HEATING CONTROL

PROCÉDÉ ET DISPOSITIF D'OPTIMISATION, BASÉE SUR INTERNET, DE PARAMÈTRES D'UNE RÉGULATION DE CHAUFFAGE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **24.03.2017 DE 102017205033**

(43) Veröffentlichungstag der Anmeldung:
**05.02.2020 Patentblatt 2020/06**

(73) Patentinhaber: **Viessmann Climate Solutions SE 35108 Allendorf (Eder) (DE)**

(72) Erfinder:
• **STRUBEL, Jan**
  **64287 Darmstadt (DE)**
• **ARNOLD, Christian**
  **36119 Neuhof-Rommerz (DE)**

(74) Vertreter: **MERH-IP Matias Erny Reichl Hoffmann Patentanwälte PartG mbB Paul-Heyse-Strasse 29 80336 München (DE)**

(56) Entgegenhaltungen:
WO-A1-2013/104948     CH-A1- 705 804
DE-A1-102012 215 368     US-A1- 2016 283 844

**Beschreibung**

Die vorliegende Erfindung betrifft ein Verfahren zum internetgestützten Optimieren von Regelparametern eines Reglers oder einer Steuerung für eine Heizungs-, Lüftungs-, Klima- und Kältetechnik- (HLKK-) Anlage, insbesondere eine Zentralheizung für ein Gebäude. Die Erfindung betrifft ferner ein System zum Ausführen des erfindungsgemäßen Verfahrens.

Typischerweise werden Regler oder Steuerungen von HLKK-Anlagen mit Steuerungs- und/oder Regelalgorithmen betrieben, deren Parametrierung durch einen Benutzer, zum Beispiel den Heizungsbauer oder den Endkunden, bei der Inbetriebnahme erfolgt. Eine nicht optimale Parametrierung, also eine Verwendung von nicht optimalen Regelparametern der Steuerungs- und/oder Regelalgorithmen, kann dazu führen, dass zu viel Energie verbraucht wird. Andererseits könnte beispielsweise bei niedrigen Außentemperaturen zu wenig thermische Leistung, zum Heizen eines Gebäudes bereitgestellt werden. Entsprechend ist denkbar, dass bei hohen Außentemperaturen zu wenig thermische Leistung zum Kühlen eines Gebäudes bereitgestellt werden könnte. In solchen Fällen kann der Benutzer der HLKK-Anlage die Regelparameter weiter (gegebenenfalls iterativ) an den jeweils betrachteten Anwendungsfall, zum Beispiel in Abhängigkeit der Gebäudedynamik, anpassen, um die Regelgüte zu erhöhen, Betriebskosten zu senken oder die Effizienz des Systems zu steigern. Um die Regelparameter zu optimieren, muss der Benutzer allerdings über Expertenwissen über den zu regelnden Prozess sowie über den Einfluss der Parameter der Algorithmen auf den Anlagenbetrieb verfügen. Alternativ zum manuellen Anpassen der Regelparameter von Steuerungs- und/oder. Regelalgorithmen kann eine automatische Anpassung durch ein überlagertes· Identifikations- und Adaptionsverfahren erfolgen. Heizungsbauer und Endkunden sind dann vollständig von der Aufgabe des Optimierens der Parametrierung befreit. Auf diese Weise können beispielsweise adaptive Heizkennlinien von Heizkreisen realisiert werden.

Gemäß dem Stand der Technik kann eine witterungsgeführte, also in Abhängigkeit des Wetters oder der Jahreszeit betriebene, Heizungsregelung dafür sorgen, dass die Vorlauftemperatur des Heizkreises in Abhängigkeit der Außentemperatur auf den Wärmebedarf im Gebäude angepasst wird. Bei optimaler Einstellung der Heizungsanlage wird nur so viel Wärme erzeugt, wie aktuell benötigt wird. Dazu wird zum Beispiel die Außentemperatur gemessen und daraus, in Abhängigkeit einer gewünschten Raumtemperatur (Raumsolltemperatur) sowie anhand von Gebäuderandbedingungen, die benötigte Vorlauftemperatur zum Erreichen der Raumsolltemperatur ermittelt. Die Beziehung zwischen Außen- und Vorlauftemperatur wird beispielsweise durch eine Heizkennlinie beschrieben. Die Heizkennlinie bewirkt, dass bei einer niedrigeren Außentemperatur eine höhere Vorlauftemperatur eingestellt wird.

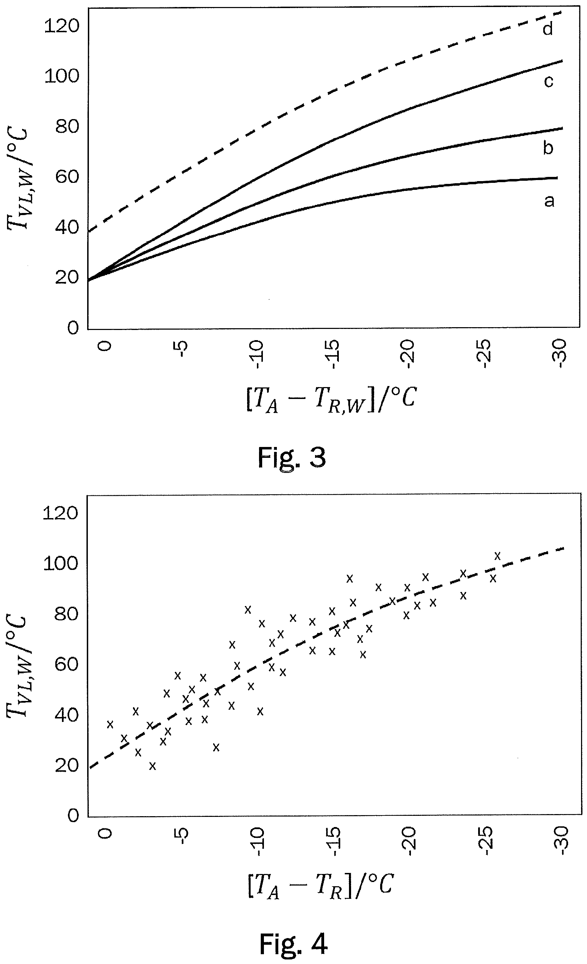

Beispiele für eine Heizkennlinie sind in Fig. 3 dargestellt. Eine Heizkennlinie liefert also für eine bestimmte Kombination aus Außentemperatur und vorgegebener Raumsolltemperatur eine bestimmte Vorlaufsolltemperatur. Die Heizkennlinie wird im Wesentlichen durch zwei Parameter charakterisiert: Neigung und Niveau. Die Neigung der Heizkennlinie gibt an, wie stark sich die Vorlauftemperatur in Abhängigkeit der Außentemperatur verändert. Bei einem alten und schlecht wärmeisolierten Haus steigen die Wärmeverluste stark an, wenn es draußen kälter wird. Die Heizkennlinie muss dann so steil sein, dass die Heizung bei niedrigen Außentemperaturen eine ausreichende thermische Leistung zur Verfügung stellt, um den Komfort des Nutzers sicher zu stellen. In modernen und gut gedämmten Häusern wirkt sich die Änderung der Außentemperatur weniger stark auf die Wärmeverluste aus. Daher kann hier die Heizkennlinie flacher gewählt werden. Auch bei großer Kälte, ist also ein leichter Anstieg der Vorlauftemperatur ausreichend. Das Niveau der Heizkennlinie definiert den Fußpunkt, also den Schnittpunkt der Heizkennlinie mit der vertikalen Achse in Fig. 3. Über eine Verschiebung der Heizkennlinie nach oben oder nach unten (vgl. Heizkennlinie c und d) kann die Wärmeabgabe der Heizungsanlage gleichmäßig erhöht oder reduziert werden. Ist es in einem Gebäude zum Beispiel immer etwas zu warm, kann durch Senken des Niveaus die Heizkennlinie nach unten verschoben werden. Somit wird die Vorlaufsolltemperatur über den gesamten Bereich der Heizkennlinie gesenkt. Hiermit kann der Energieverbrauch einer Heizungsanlage gesenkt werden.

Ein Einstellen der Heizkennlinie findet in der Regel nur selten, üblicherweise bei der Installation einer Heizungsanlage, und gegebenenfalls bei wiederholt zu geringer Raumtemperatur, statt. Hierdurch kann eine Heizungsanlage mit einem höheren als notwendigen Energieverbrauch betrieben werden. Die vorliegende Erfindung stellt ein Verfahren sowie ein entsprechendes System zum Optimieren von Regelparametern eines Reglers beziehungsweise einer Steuerung einer HLKK-Anlage, also insbesondere einer Heizungsanlage, über das Internet bereit. Durch das erfindungsgemäße Verfahren beziehungsweise System kann eine HLKK-Anlage auf sich ändernde Randbedingungen, die zum Beispiel durch Schwankungen der Außentemperatur, der Sonneneinstrahlung oder durch Veränderungen an oder im Gebäude selbst verursacht oder beeinflusst werden, angepasst werden. Somit kann eine HLKK-Anlage besonders effizient und energiesparend betrieben werden. Außerdem kann eine Unterversorgung vermieden werden.

Ein Verfahren zum internetgestützten Adaptieren einer Heizungsanlage wird zum Beispiel in der US Patentanmeldung Nr. US 2015/0032267 A1 offenbart. Sensoren, die mit einer Heizungssteuerungseinheit verbunden sind, messen die Innen- und Außentemperatur. Die Steuereinheit verwendet ein neuronales Netzwerk zum Bestimmen einer Vorhersage der benötigten Heizenergie anhand derer eine modifizierte Außentemperatur berechnet wird, um die Heizungsregelung entsprechend zu steuern. Hier findet also keine Optimierung der Regelparameter statt, sondern durch modifizieren eines Eingangssignals der Steuerung wird das Ausgangssignal der Steuerung in bestimmter Weise verändert.

Ein weiteres Regelungssystem für die Heizung eines Gebäudes ist aus der deutschen Übersetzung DE 699 18 379 T2 einer europäischen Patentschrift bekannt. Eine Vielzahl von Messfühlern misst die Außentemperatur, sowie die Vorlauftemperatur und Raumtemperatur. Das System umfasst eine Einheit zum Berechnen einer optimalen Heizleistung mit einem neuronalen Netzwerk. Die optimale Heizleistung wird unter Zuhilfenahme von Prognosen der Außenbedingungen und Vorhersagen der Innentemperatur des Gebäudes berechnet.

Das im Folgenden beschriebene erfindungsgemäße Verfahren soll die für das Regeln beziehungsweise Steuern einer in einem Gebäude installierten Heizungs-, Lüftungs-, Klima- und Kältetechnik- (HLKK-) Anlage erforderlichen Regelparameter internetgestützt optimieren. Die optimierten Parameter können dann entweder automatisch oder durch einen Benutzer am Regler oder an der Steuerung eingestellt werden. Dazu kann eine Handlungsempfehlung an den Benutzer des Reglers oder der Steuerung, wie zum Beispiel an einen Heizungsbauer oder einen Endkunden der Heizungsanlage gesendet werden. Das Anzeigen der optimierten Regelparameter kann über eine Vorrichtung, die über das Internet kommuniziert, erfolgen, beispielsweise durch eine App auf einem mobilen Endgerät.

Zum Ermitteln und Optimieren der Regelparameter erfasst eine Vorrichtung (beispielsweise ein eingebettetes System) relevante Systemzustände der HLKK-Anlage über einen gewissen Zeitraum mit einer geeigneten Sensorik und sendet diese über eine Internetverbindung zur weiteren Verarbeitung an einen zentralen Server. Die relevanten Systemzustände umfassen zum Beispiel eine Außentemperatur des Gebäudes, eine Raumtemperatur eines Referenzraumes, eine Vorlauftemperatur, eine Rücklauftemperatur, eine vorgegebene Raumsolltemperatur, eine vorgegebene Vorlaufsolltemperatur, einen Grad der Sonneneinstrahlung auf das Gebäude und einen Fremdwärmequelleneintrag in den Referenzraum. Diese Systemzustände oder Systemgrößen werden teilweise als Messwerte von entsprechenden Sensoren erfasst und als Datenpakete an den Server übertragen.

Auf dem Server erfolgen Verarbeitung und Analyse der erfassten Systemgrößen zum Berechnen der optimierten Regelparameter. Außerdem überträgt der Server die durch einen Berechnungsalgorithmus optimierten Regelparameter an den Benutzer. Die Übergabe der Parameter an den Nutzer kann als eine Handlungsempfehlung zum Einstellen der optimierten Regelparameter im Regler der HLKK-Anlage ausgeführt sein. Alternativ können die berechneten optimierten Regelparameter auch vom Regler oder der Steuerung der HLKK-Anlage direkt empfangen und übernommen werden, so dass eine automatische Optimierung der Regelung der HLKK-Anlage erfolgen kann. Die Optimierung der Regelparameter kann in regelmäßigen Zeitintervallen erfolgen, so dass die HLKK-Anlage kontinuierlich an sich ändernde Randbedingungen angepasst werden kann.

Der Erfindung liegt die Aufgabe zugrunde, ein gegenüber dem Stand der Technik verbessertes Verfahren zum Optimieren von Regelparameter eines Regler beziehungsweise einer Steuerung einer HLKK-Anlage anzugeben. Außerdem soll ein verbessertes System zum Optimieren von Regelparameter eines Regler beziehungsweise einer Steuerung einer HLKK-Anlage bereitgestellt werden.

Erfindungsgemäß wird die Aufgabe gelöst durch ein Verfahren zum Ermitteln eines Satzes optimierter Regelparameter eines Reglers oder einer Steuerung für eine HLKK- (Heizungs-, Lüftungs-, Klima-und Kältetechnik) Anlage gemäß Anspruch 1. Die Aufgabe wird ferner gelöst durch ein System zum Ermitteln eines Satzes optimierter Regelparameter eines Reglers oder einer Steuerung für eine HLKK-Anlage gemäß Anspruch 6. Das erfindungsgemäße System ist insbesondere konfiguriert, das erfindungsgemäße Verfahren zum Ermitteln eines Satzes optimierter Regelparameter auszuführen. Die HLKK-Anlage ist in einem Gebäude installiert und dazu konfiguriert, die Temperatur mindestens eines Raumes, vorzugsweise aller Räume des Gebäudes, zu regeln.

In einem ersten Schritt des Verfahrens wird mindestens eine Außentemperatur, also die Temperatur außerhalb des Gebäudes, erfasst. Zum Erfassen der Außentemperatur umfasst das System mindestens einen Außentemperatursensor. Dieser ist an einem dafür zweckdienlichen Punkt außerhalb des Gebäudes, zum Beispiel an einem windgeschützten Ort am Dach des Gebäudes, angeordnet.

In einem weiteren Schritt wird mindestens eine Raumisttemperatur mindestens eines Referenzraumes, also die aktuelle Lufttemperatur des mindestens einen Raumes, dessen Temperatur für die Regelung der HLKK-Anlage herangezogen werden soll, erfasst. Zum Erfassen der Raumisttemperatur umfasst das System mindestens einen im Referenzraum angeordneten Raumtemperatursensor. Anstatt in nur einem Referenzraum die Raumisttemperatur zu messen, kann das Verfahren beziehungsweise das System auch derart erweitert werden, dass in mehreren oder sogar in allen Räumen des Gebäudes jeweils mindestens eine Raumisttemperatur gemessen wird. In diesem Fall umfasst das System eine Vielzahl von Raumtemperatursensoren.

Ferner wird in einem Verfahrensschritt eine Vorlauftemperatur erfasst. Die Vorlauftemperatur ist die Temperatur eines wärme- beziehungsweise kälteübertragenden Trägermediums eines Heiz- oder Kühlkreises der HLKK-Anlage. Zum Erfassen der Vorlauftemperatur umfasst das System mindestens einen Vorlauftemperatursensor.

In einem weiteren Verfahrensschritt wird eine vorgegebene Raumsolltemperatur erfasst. Zum Vorgeben der Raumsolltemperatur umfasst das System eine Einrichtung zum Vorgeben einer Raumsolltemperatur. Die Raumsolltemperatur kann beispielsweise über einen im Raum angeordneten Thermostaten von einem Benutzer vorgegeben werden oder es kann eine Raumsolltemperatur über eine entsprechende Schnittstelle von einer übergeordneten elektronischen Einrichtung, wie zum Beispiel einer Gebäudesteuerung, empfangen werden.

Ferner wird eine vorgegebene Vorlaufsolltemperatur erfasst. Hierzu umfasst das System eine Einrichtung zum Vorgeben einer Vorlaufsolltemperatur. Diese Einrichtung kann zum Beispiel Teil des Reglers oder der Steuerung der HLKK-Anlage sein. Die vorgegebene Vorlaufsolltemperatur kann beispielsweise anhand der gemessenen Außentemperatur und der vorgegebenen Raumsolltemperatur über eine Heizkennlinie (siehe Fig. 3) ermittelt werden.

In einem weiteren Verfahrensschritt wird ein Datenpaket aus den erfassten Messwerten und einem Zeitpunkt des Erfassens erzeugt. Hierzu umfasst das System eine Einrichtung zum Erzeugen eines Datenpakets. Das Datenpaket kann eine Vielzahl von Messwerten enthalten, die für das Berechnen optimierter Regelparameter zweckdienlich sind. Darüber hinaus können die Datenpakete auch zum Überwachen des aktuellen Zustands oder einer historischen Zustands der HLKK-Anlage verwendet werden.

Die Schritte des Erfassens der Außentemperatur, Raumisttemperatur, Vorlauftemperatur, Raumsolltemperatur und Vorlaufsolltemperatur können im Wesentlichen gleichzeitig oder auch kurz nacheinander ausgeführt werden. Vorzugsweise werden die Messwerte zyklisch zu vorgegebenen Zeitpunkten erfasst. Für das Erzeugen des Datenpakets muss den Messwerten lediglich ein bestimmter Zeitpunkt zugeordnet werden. Dieser zugeordnete Zeitpunkt kann auch der Zeitpunkt des Erzeugens des Datenpaktes sein. Da Temperaturänderungen im Vergleich zu den Vorgängen des Erfassens und Verarbeitens der Messwerte jedoch relativ träge sind, haben kleine Zeitunterschiede keine große Auswirkung.

Das erzeugte Datenpaket wird über eine Internetverbindung an einen Server übertragen und in einem mit dem Server verbundenen Speichermedium gespeichert. Das Speichermedium kann zum Beispiel einen Pufferspeicher zum temporären Zwischenspeichern der Empfangenen Datenpakete und einen permanenten Speicher zum mit einer Datenbank zum langfristigen Speichern der Datenpakete umfassen. Zum Übertragen des Datenpakets umfasst das System eine mit dem Regler beziehungsweise der Steuerung der HLKK-Anlage verbundene Übertragungseinrichtung. Die Übertragungseinrichtung umfasst eine geeignete Schnittstelle zum Übertragen von Datenpaketen an den Server über das Internet. Entsprechend umfasst der Server eine geeignete Schnittstelle zum Empfangen der Datenpakte. Umgekehrt ist die Schnittstellen des Servers auch dazu geeignet Daten, insbesondere den Satz optimierter Regelparameter, an den Regler oder an einen Benutzer zu senden. Entsprechend ist die Schnittstelle des Reglers konfiguriert, Daten zu empfangen.

Anhand der Messwerte des übertragenen und gespeicherten Datenpakets wird ein Satz optimierter Regelparameter berechnet. Das Berechnen der Regelparameter erfolgt zudem anhand von Messwerten einer Vielzahl weiterer zu früheren Zeitpunkten eines festgelegten Zeitraums erzeugter Datenpakete und/oder mindestens eines einer Vielzahl zuvor ermittelter Sätze optimierter Regelparameter.

Die Verwendung von weiteren Messwerten beziehungsweise von weiteren Datenpaketen einer Vielzahl früherer Zeitpunkte oder mindestens eines zuvor ermittelten Satzes optimierter Regelparameter für das Berechnen des neuen Satzes optimierter Regelparameter ermöglicht ein iteratives Berechnen der Regelparameter. In anderen Worten ausgedrückt, kann der Algorithmus zum Berechnen der Regelparameter konfiguriert sein, dass bei jedem erneuten Durchführen zusätzliche Datenpakete verwendet werden. Es erfolgt also eine schrittweises Annähern an die optimalen Regelparameter beim Wiederholen des Berechnungsvorgangs. Die Bedeutung der Begriffe "optimierte Regelparameter" und "optimale Regelparameter" wird im Folgenden noch näher beschrieben.

Das Berechnen des Satzes optimierter Regelparameter erfolgt durch Ausführen eines Berechnungsalgorithmus auf dem Server. Hierzu umfasst der Server mindestens einen Prozessor, der konfiguriert ist, den Algorithmus auszuführen.

Der berechnete Satz optimierter Regelparameter wird in dem mit dem Server verbundenen Speichermedium gespeichert und über die Internetverbindung vom Server an den Regler oder die Steuerung der HLKK-Anlage übertragen. Alternativ oder zusätzlich kann eine Benachrichtigung an einen Benutzer der HLKK-Anlage mit dem berechneten Satz optimierter Regelparameter gesendet werden. Die Schnittstellen des Servers und der Reglers oder der Steuerung der HLKK-Anlage sind somit jeweils zum Senden und Empfangen von Datenpaketen beziehungsweise Regelparametern ausgelegt.

Um das Ergebnis der Berechnung optimierter Regelparameter zu verbessern, können weitere Messwerte erfasst werden, die beim Berechnen der Regelparameter berücksichtigt werden. Dazu wird vorzugsweise mindestens eine Rücklauftemperatur, ein Massenstrom des Trägermediums durch den Vorlauf, eine auf das Gebäude einfallende Sonneneinstrahlung und/oder ein Fremdwärmequelleneintrag erfasst. Das Datenpaket wird dann entsprechend mit dem oder den weiteren Messwert(en) erzeugt. Der Berechnungsalgorithmus verwendet beim Berechnen des Satzes optimierter Regelparameter mindestens einen der weiteren zusätzlichen Messwerte.

Zum Erfassen der Rücklauftemperatur kann das System mindestens einen Rücklauftemperatursensor aufweisen. Zum Erfassen des Massenstroms des Trägermediums durch den Vorlauf oder Rücklauf kann das System mindestens einen Massenstromsensor, der entsprechend im Vorlauf oder Rücklauf angeordnet sein kann, aufweisen. Zum Erfassen der Sonneneinstrahlung kann das System einen Sensor zum Messen einer totalen Wärmeeinstrahlung, zum Beispiel einen Globalstrahlungssensor zum Messen der Sonneneinstrahlung, aufweisen. Zum Erfassen des Fremdwärmequelleneintrags kann das System eine Einrichtung zum Ermitteln eines Fremdwärmequelleneintrags aufweisen. Die Einrichtung zum Erzeugen eines Datenpakets kann entsprechend konfiguriert sein, das Datenpaket einschließlich des oder der weiteren Messwerte(s) zu erzeugen.

Sonneneinstrahlung kann die Temperatur in einem Gebäude, zum Beispiel eines Raumes, stark beeinflussen. Da Sonneneinstrahlung Wetter- und Jahreszeitenschwankungen unterliegt, kann es vorteilhaft sein, wenn die Sonneneinstrahlung gemessen und beim Berechnen der Regelparameter berücksichtigt wird.

Ein Fremdwärmequelleneintrag kann von einer oder mehreren im Raum befindlichen Vorrichtung(en) stammen. Insbesondere könne elektrische Vorrichtungen Wärme abgeben. So können beispielsweise ein Kühlschrank oder ein Herd einen nicht unerheblichen Wärmeeintrag im Raum erzeugen.

Der beim Berechnen des Satzes optimierter Regelparameter verwendete Zeitraum wird vorzugsweise in Abhängigkeit der Anzahl im Speichermedium gespeicherter Datenpakete vorgegeben. Je mehr gespeicherte Datenpakete im Speichermedium des Servers vorliegen, desto größer kann der festgelegte Zeitraum vorgegeben werden. Je größer der verwendete Zeitraum ist, desto genauer kann beispielsweise ein mathematisches Modell des zu regelnden Gebäudes berechnet werden. Eine lange Zeitreihe von gespeicherten Datenpaketen erlaubt es, die Regelstrecke genauer zu modellieren. Somit kann die Berechnung der optimierten Regelparameter verbessert werden.

Bei einer bevorzugten Ausführungsform des erfindungsgemäßen Verfahrens beziehungsweise des erfindungsgemäßen Systems umfasst das Berechnen des Satzes optimierter Regelparameter ferner einen Schritt des Ermittelns einer ersten Abweichung zwischen der Raumisttemperatur und der Raumsolltemperatur für jedes Datenpaket eines vorgegebenen Zeitraums. Eine kleine Abweichung bedeutet, dass die Regelung der HLKK-Anlage bereits gut funktioniert, also dass die zugehörigen Regelparameter bereits nahe an der optimalen Einstellung lagen. Je kleiner die Abweichung, desto näher sind die ermittelten Regelparameter an der optimalen Einstellung. Entsprechend kann in einem weiteren Schritt eine zweite Abweichung zwischen der Vorlauftemperatur und der vorgegebenen Vorlauftemperatur für jedes Datenpaket des vorgegebenen Zeitraums ermittelt werden.

In Abhängigkeit der ermittelten ersten und/oder zweiten Abweichung kann ein Gewichtungsfaktor zwischen 0 und 1 bestimmt werden. Der Gewichtungsfaktor beim Berechnen des Satzes optimierter Regelparameter hat den Zweck, dass Datenpakete mit niedriger erster und/oder zweiter Abweichung stärker berücksichtigt werden und Datenpakete mit hoher erster und/oder zweiter Abweichung weniger stark berücksichtig werden. In anderen Worten ausgedrückt, sucht der Algorithmus nach Datensätzen, bei denen Eingangsgrößen, wie zum Beispiel eine Vorlauftemperatur, erzeugt wurden, die zu einem nahezu optimalen Ausgangsverlauf, also zum Beispiel zu einer niedrigen Abweichung zwischen Raumtemperatur und Raumsolltemperatur, geführt haben.

Alternativ kann der Satz optimierter Regelparameter nur aus solchen gespeicherten Datenpaketen, für welche die ermittelte erste Abweichung und/oder die ermittelte zweite Abweichung kleiner als oder gleich groß wie ein jeweils vorgegebener Schwellenwert sind/ist, berechnet werden. Dies entspricht dem Verwenden einer Gewichtungsfunktion, die entweder den Wert Null oder Eins annimmt.

Vorzugsweise erfolgt das Erfassen der Messwerte durch die jeweiligen Sensoren regelmäßig nach Ablauf eines vorgegebenen Zeitintervalls. Das Zeitintervall kann beispielsweise einige Minuten oder Stunden betragen. So kann zum Beispiel alle zehn oder fünfzehn Minuten ein Satz Messwerte erfasst und ein entsprechendes Datenpaket erzeugt werden. Ferner kann das Berechnen des Satzes optimierter Regelparameter durch den Prozessor wiederkehrend jeweils dann ausgeführt werden, wenn eine vorbestimmte Vielzahl vorgegebener Zeitintervalle abgelaufen ist, so dass eine entsprechende Vielzahl erzeugter Datenpakte zum Berechnen des Satzes optimierter Regelparameter im Speichermedium des Servers gespeichert vorliegt. Dies kann beispielsweise einmal, zweimal oder mehrmals am Tag, alle zwei Tage, einmal pro Woche oder nur wenige male pro Monat erfolgen. Die Zeitintervalle des Erfassens der Messwerte beziehungsweise des Berechnens der optimierten Regelparameter kann je nach verfügbaren Speicherplatz im Regler beziehungsweise beim Server eingestellt werden. Ferner können die Zeitintervalle auf die Komplexität der HLKK-Anlage, die Anzahl der Messwerte, die Geschwindigkeit der Internetverbindung oder ähnliche Randbedingungen angepasst werden.

**Kurzbeschreibung der Figuren**

Weitere vorteilhafte Ausgestaltungen werden nachfolgend anhand eines in den Zeichnungen dargestellten Ausführungsbeispiels, auf welches die Erfindung jedoch nicht beschränkt ist, näher beschrieben.

Es zeigen schematisch:

**Figur 1** Fig. 1 zeigt einen strukturellen Aufbau eines Systems beziehungsweise eines Verfahrens zum internetgestützten Optimieren von Regelparametern einer Heizungsanlage gemäß einem ersten Ausführungsbeispiel der Erfindung.

**Figur 2** Fig. 2a und Fig. 2b zeigen weitere Details des ersten Ausführungsbeispiels der Erfindung.

**Figur 3** Fig. 3 zeigt vier beispielhafte Heizungskennlinien.

**Figur 4** Fig. 4 zeigt ein Beispiel einer an eine Vielzahl von Messwerten gefittete Heizkennlinie.

**Figur 5** Fig. 5a und Fig. 5b zeigen jeweils eine lange Zeitreihe von Messwerten einer Raumtemperatur und einen entsprechenden Verlauf optimierter Regelparameter.

**Figur 6** Fig. 6a illustriert einen vereinfachten Signalfluss des physikalischen Prozesses eines Heizkreises. Fig. 6b illustriert die Approximation des Prozesses durch ein mathematisches Modell.

## Ausführliche Beschreibung der Erfindung anhand von Ausführungsbeispielen

Bei der nachfolgenden Beschreibung einer bevorzugten Ausführungsform der vorliegenden Erfindung bezeichnen gleiche Bezugszeichen gleiche oder vergleichbare Komponenten.

## Erstes Ausführungsbeispiel

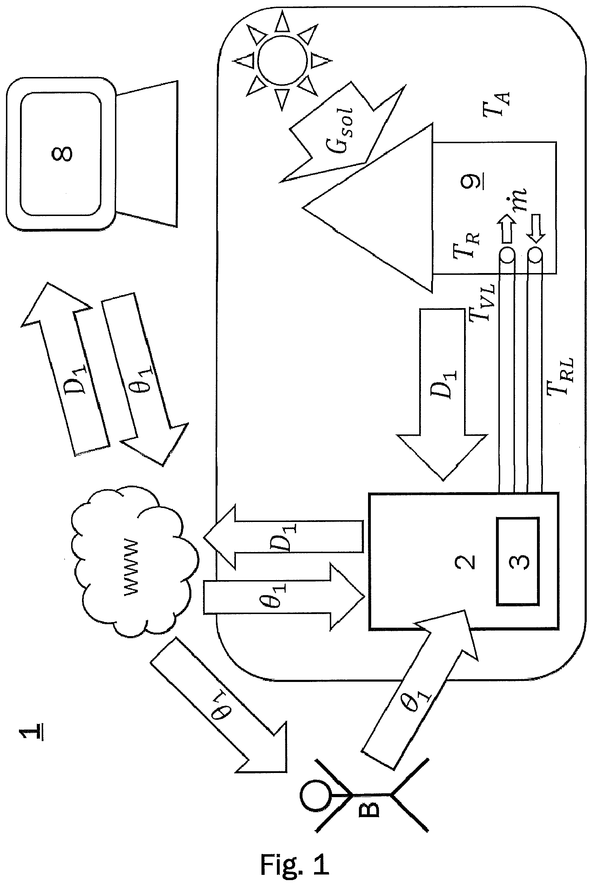

Fig. 1 zeigt ein erstes Ausführungsbeispiel eines Systems 1 zum Berechnen eines Satzes optimierter Regelparameter $\Theta$ beziehungsweise $\Theta_k$ eines Reglers 3 oder einer Steuerung 3 für eine HLKK- (Heizungs-, Lüftungs-, Klima- und Kältetechnik) Anlage 2 mit dem charakteristischen Signalfluss gemäß dem erfindungsgemäßen Verfahren. Die Vektoren $\Theta = \{\vartheta_1 ... \vartheta_q\}$ beziehungsweise $\Theta_k = \{\vartheta_1 ... \vartheta_q\}_k$ repräsentieren einen Satz von insgesamt $q$ Regelparametern. Der Index $k$ bezieht sich jeweils auf den aktuellen Zeitpunkt und deutet an, dass es sich um einen iterativ optimierten Satz Regelparameter handelt. Der Satz Regelparameter $\Theta$ ohne den Laufindex $k$ wird zum Beispiel beim herkömmlichen Least-Squares-Verfahren ohne iterative Berechnungsmethode verwendet.

Als Beispiel für eine HLKK-Anlage 2 wird im Folgenden eine Heizungsanlage 2 betrachtet. Die Heizungsanlage 2 ist in einem Gebäude installiert. Im Folgenden wird beispielhaft ein einzelner Raum 9 betrachtet, dessen Temperatur $T_R$ durch die Heizungsanlage 2 geregelt wird. Dieser Raum 9 kann auch als Referenzraum für die Temperaturregelung des gesamten Gebäudes verwendet werden. Alternativ können mehrere Referenzräume verwendet werden, beziehungsweise kann eine Temperaturregelung für jeden Raum des Gebäudes stattfinden.

Die Heizungsanlage 2 erfasst fortlaufend relevante Systemzustände wie zum Beispiel die Außentemperatur $T_A$, die Raumtemperatur $T_R$, die Vorlauftemperatur $T_{VL}$, die Rücklauftemperatur $T_{RL}$ und den Massenstrom $\dot{m}$ eines Trägermediums durch eine Vorlaufleitung beziehungsweise durch eine Rücklaufleitung der Heizungsanlage 2 und überträgt diese Messwerte zusammengefasst als Datenpaket $D_k$ des Messzeitpunkts $t_k$ über das Internet an einen Server 8. Zusätzlich kann über einen geeigneten Sensor die Sonneneinstrahlung $G_{sol}$ die zur Erwärmung des Gebäudes beziehungsweise des Raumes beiträgt, erfasst werden.

Der Server 8 ist dazu ausgelegt, die empfangenen Datenpakete $D_k$ zu speichern und auszuwerten, und somit einen Satz optimierter Regelparameter $\Theta_k$ für einen Heizungsregler 3 der Heizungsanlage 2 zu bestimmen. Der Satz optimierter Regelparameter $\Theta_k$ kann anschließend an einen Benutzer B, zum Beispiel an den Heizungsbauer oder den Endkunden, übertragen werden. Dann hat dieser die Möglichkeit, sich zur Übernahme der Regelparameter $\Theta_k$ zu entscheiden. In diesem Fall stellt der Benutzer B die Regelparameter $\Theta_k$ am Regler 3 ein. Alternativ können die optimierten Regelparameter $\Theta_k$ auch direkt über das Internet an den Heizungsregler 3 übertragen und von diesem übernommen werden.

Das erfindungsgemäße Verfahren kann somit auch bei Heizungsreglern älterer Heizungssysteme eingesetzt werden, deren Regelparameter nicht über das Internet verstellt werden können. Der zentrale Server 8 kann außerdem zeitgleich optimierte Regelparameter mehrerer verschiedener entfernter HLKK-Anlagen bestimmen. Dazu empfängt der Server 8 Datenpakete mehrerer HLKK-Analgen, wertet diese aus und überträgt die errechneten optimierten Regelparameter an die jeweiligen Benutzer oder Regler.

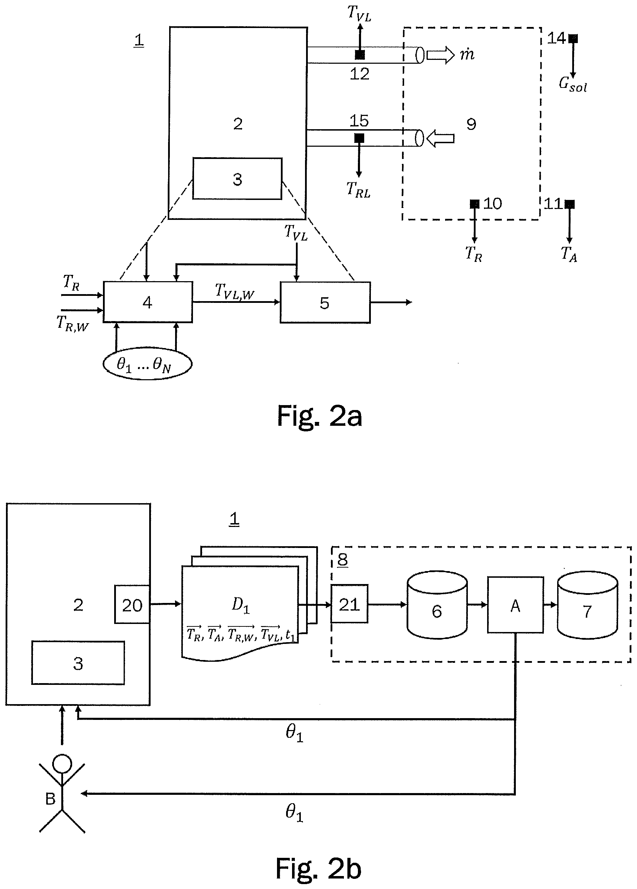

Fig. 2a und Fig. 2b zeigen weitere Details des ersten Ausführungsbeispiels der Erfindung. In Fig. 2a ist ein Teil des Systems 1 zum Bestimmen eines Satzes optimierter Regelparameter $\Theta_k$ dargestellt. Das System umfasst mehrere Sensoren zum Erfassen von relevanten Systemzuständen. Im Vorlauf der Heizungsanlage 2 ist ein Vorlauftemperatursensor 12 zum Erfassen der Vorlauftemperatur $T_{VL}$ angeordnet. Im Rücklauf der Heizungsanlage 2 ist ein Rücklauftemperatursensor 15 zum Erfassen der Rücklauftemperatur $T_{RL}$ angeordnet. Im Vorlauf und/oder im Rücklauf kann zudem ein Massenstromsensor zum Erfassen des Massenstroms $\dot{m}$ angeordnet sein. in im Raum 9 angeordneter Raumtemperatursensor 10 erfasst die Raumtemperatur $T_R$. Die Heizungsanalage 2 versorgt den Vorlauf mit einem Trägermedium, das Wärme zu einem im Raum 9 angeordneten Heizkörper 16 transportiert. Über einen Thermostaten 17 im Raum 9 kann eine gewünschte Raumsolltemperatur $T_{R,W}$ vorgegeben werden.

Außerhalb des Gebäudes sind ein Außentemperatursensor 11 zum Erfassen der Außentemperatur $T_A$ und ein Sonnenstrahlsensor 14 zum Erfassen einer Sonneneinstrahlung $G_{sol}$ angeordnet. Zusätzlich kann in dem Raum mindestens ein weiterer (nicht dargestellter) Sensor zum Erfassen eines Fremdwärmequelleneintrags $P_{FW}$ angeordnet sein. Quelle für einen Fremdwärmequelleneintrags $P_{FW}$ kann beispielsweise ein elektrisches Gerät sein, das Wärme abgibt, wie zum Beispiel ein Kühlschrank oder ein Elektroherd.

Der Regler 3 der Heizungsanlage 2 weist einen Heizkreisregler 4 und einen Kesselregler 5 auf. Dem Heizkreisregler 4 werden mindestens die erfassten Messgrößen Raumtemperatur $T_R$, Außentemperatur $T_A$, Raumsolltemperatur $T_{R,W}$ und Vorlauftemperatur $T_{VL}$ zugeführt. Optional kann dem Heizkreisregler mindestens eine der Messgrößen Sonneneinstrahlung $G_{sol}$, Massenstrom $\dot{m}$ und/oder Fremdwärmequelleneintrag $P_{FW}$ zugeführt werden. Anhand eines dem Heizregler 4 vorgegebenen Regelverfahren ermittelt der Heizregler 4 eine Vorlaufsolltemperatur $T_{VL,W}$, die an einen Kesselregler 5 ausgegeben wird. Das vom Heizregler 4 verwendete Regelverfahren kann beispielsweise auf einer Heizkennlinie beruhen, wie im Folgenden näher beschrieben wird. Im Allgemeinen verwendet der Heizregler 4 einen Satz Regelparameter $\Theta = \{\nu_1 \ldots \nu_N\}$. Bei einer Heizkennlinie umfasst der Satz Regelparameter beispielsweise die beiden Parameter Neigung $\vartheta_1 = \theta_S$ und Niveau $\vartheta_2 = \theta_L$.

Fig. 2b illustriert die Übertragung der Messwerte in Form von Datenpaketen $D_k$ an einen Server 8 zum Berechnen optimierter Regelparameter $\Theta_k$. Der Heizungsregler 3 umfasst eine Einrichtung 22 zum Erzeugen des Datenpaketes $D_k$ mit den Messwerten und einem Zeitpunkt $t_k$ des Erfassens der Messwerte. Über eine Schnittstelle 20 zum Internet wird das Datenpaket $D_k$ an einem Server 8, der über eine Schnittstelle 21 ebenfalls mit dem Internet verbunden ist, übertragen.

Der Server 8 umfasst einen Puffer 6, in dem das empfangene Datenpaket $D_k$ zunächst zwischengespeichert wird, und einen permanenten Speicher 7 mit einer Datenbank, in der empfangene Datenpakete und berechnete Regelparameter gespeichert werden. Der Server 8 weist außerdem einen Prozessor CPU auf, der dazu konfiguriert ist, aus den Datenpaketen einen Satz optimierter Regelparameter $\Theta_k$ zu berechnen. Der Satz optimierter Regelparameter $\Theta_k$ kann dann über die Schnittstelle 21 wieder an den Regler 4 oder an einen Benutzer der Heizungsanlage 2 übertragen werden.

Der Heizregler 4 der Heizungsanlage 2 des ersten Ausführungsbeispiels kann beispielsweise mittels einer Heizkennlinie geregelt werden. Die Heizkennlinie beschreibt einen Zusammenhang zwischen der Außentemperatur $T_A$ und dem Sollwert der Vorlauftemperatur $T_{VL,W}$ der Heizungsanlage 2. Eine Heizungskennlinie wird durch die beiden Parameter Niveau $\theta_N$ und Neigung $\theta_S$ charakterisiert. Der zu optimierende Satz Parameter $\Theta_k$ der Heizkennlinie ist also $\Theta_k = \{\theta_N, \theta_S\}_k$.

Mit einer Heizungskennlinie lässt sich ein witterungsgeführter Betrieb der Heizungsanlage 2 realisieren. Bei dem erfindungsgemäßen Optimierungsverfahren werden die Systemzustände Vorlauftemperatur $T_{VL}$, Außentemperatur $T_A$ und Temperatur im Referenzraum $T_R$ mittels der entsprechenden in Fig. 2a gezeigten Temperatursensoren 10, 11 und 12 erfasst. Die Raumsolltemperatur $T_{R,W}$ kann beispielsweise über den Thermostaten 17 durch einen Benutzer vorgegeben werden.

In Fig. 3 sind vier exemplarische Heizkennlinien a bis d für verschiedene Werte der Parameter Neigung $\theta_S$ und Niveau $\Theta_N$ bei einer Raumsolltemperatur $T_{R,W}$ von 20°C dargestellt. Die drei Heizkennlinien a bis c unterscheiden sich nur durch den Parameter Neigung $\theta_S$. Es ist zu erkennen, dass bei einer Vergrößerung der Neigung $\theta_S$ (von a nach c) die Heizkennlinie steiler verläuft. Eine Veränderung des Parameters Niveau $\theta_N$ verschiebt entsprechend die Kennlinie in vertikaler Richtung. Dies ist beispielhaft anhand der beiden Heizkennlinien c und d dargestellt. In Abhängigkeit der Außentemperatur $T_A$ und der eingestellten Raumsolltemperatur $T_{R,W}$ errechnet der Heizregler 4 mittels der Heizkennlinie den Sollwert der Vorlauftemperatur $T_{VL,W}$ welcher wie in Fig. 2a dargestellt an den Kesselregler 5 weitergereicht wird.

Bei gattungsgemäßen Heizungsreglern gemäß dem Stand der Technik lassen sich die beiden Parameter Neigung und Niveau der Heizkennlinie zum Beispiel über ein Konfigurationsmenü am Heizungsregler einstellen. Häufig nimmt ein Installateur einer Heizungsanlage nur bei der Inbetriebnahme der Heizungsanlage eine Einstellung der Parameter in Abhängigkeit von Gebäudeeigenschaften vor. Teilweise werden Heizungsregler sogar mit den im Auslieferungszustand eingestellten Parametern betrieben. Eine Anpassung der Parameter im laufenden Heizbetrieb findet meist nur dann statt, wenn eine erhebliche Abweichung vom erwarteten Komfort der Heizungsanlage vorliegt. Um eine Unterversorgung mit Wärme zu vermeiden, werden Heizungsanlagen auch oft mit einer höheren Vorlauftemperatur als nötig betrieben. Es kann also zu einem überhöhten Energieverbrauch kommen.

Die Parameter Neigung $\theta_S$ und Niveau $\theta_N$ der Heizkennlinie können mit dem erfindungsgemäßen System 1 optimiert werden. Somit kann die Heizungsanlage 2 besonders effizient betrieben werden. Ein überhöhter Energiebedarf oder eine zu geringe bereitgestellte Wärmemenge werden vermieden.

Wie zuvor beschrieben werden die zeitabhängigen Messwerte beziehungsweise Sollwerte der relevanten Zustandsgrößen in regelmäßigen Zeitabständen erfasst und als Datenpakete an den Server 8 übertragen. Die Messwerte können hierbei als Datenvektoren dargestellt werden, die alle Messwerte einer Zeitreihe umfassen. Beispielsweise können die Messwerte über den Zeitraum von einem Tag mit einer Auflösung $t_S$ von 15 Minuten aufgenommen werden, so dass in 24 Stunden 96 Datenpakete $D_1 \ldots D_{96}$ erzeugt und an den Server übertragen. Der Datenvektor $\vec{T}_A$ umfasst also 96 Messwerte der Außentemperatur:

$$\vec{T}_A = [T_A(1) \ldots T_A(96)]$$

Somit kann der Server 8 in regelmäßigen Zeitabständen $t_S$ erneut eine Berechnung der optimierten Regelparameter durchführen. Insbesondere können die Regelparameter iterativ berechnet werden. Das bedeutet, dass bei der Berechnung der Regelparameter entweder die Datenpakete vergangener Zeitpunkte oder zuvor berechnete Regelparameter verwendet werden.

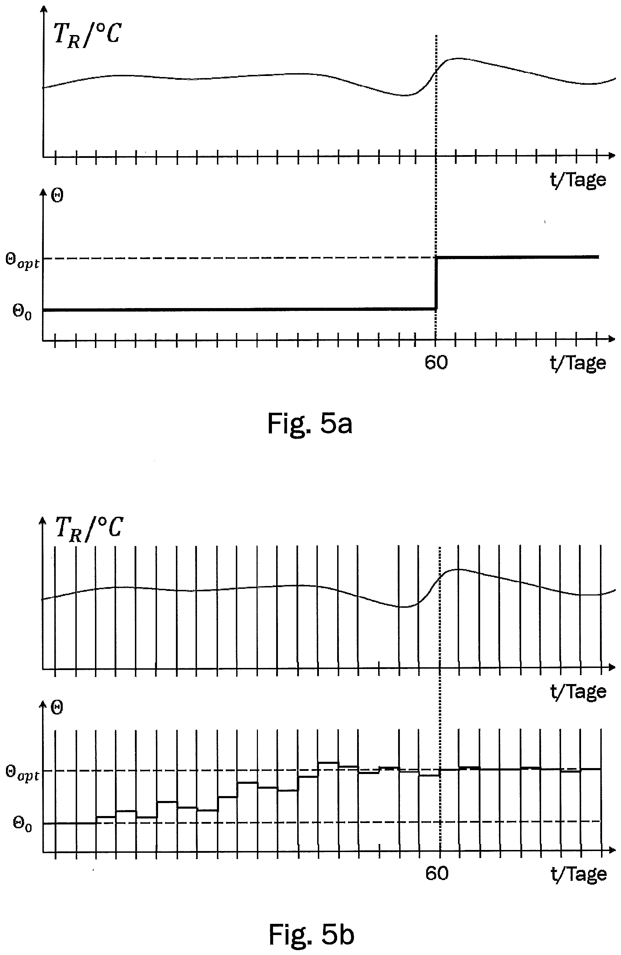

Der Vorteil des iterativen Ansatzes wird nun durch einen Vergleich eines herkömmlichen Verfahrens mit der erfindungsgemäßen iterativen Berechnung illustriert. Die Berechnung des Satzes optimierter Regelparameter kann zum Beispiel unter Verwendung bekannter Methoden erfolgen. Im Folgenden werden zwei Ausführungsbeispiele des Berechnungsverfahrens beschrieben. Bei einem herkömmlichen Least-Squares-Verfahren zum Optimieren von Regelparametern eines Heizungsreglers müssen zunächst Messdaten über einen langen Zeitraum aufgenommen werden. Das obere Diagramm der Fig. 5a zeigt beispielhaft einen gemessenen Verlauf der Raumtemperatur $T_R$ über einen Zeitraum von 60 Tagen. Das heißt, dass bei der Erfassung von 96 Datenpaketen am Tag insgesamt $60 \cdot 96 = 5760$ Datenpakete gespeichert und bei der Berechnung der Regelparameter ausgewertet werden. Das untere Diagramm der Fig. 5a zeigt einen Initialwert $\Theta_0$ der Regelparameter sowie den gesuchten Satz optimaler Regelparameter $\Theta_{opt}$. Das herkömmliche Verfahren benötigt hier 60 Tage, um ein Ergebnis zu liefern. Die große Anzahl von Datenpaketen kann zudem die Berechnung der Regelparameter sehr aufwändig werden lassen.

Der Vorteil der iterativen Ausführung der Berechnung optimierter Regelparameter wird anhand von Fig. 5b beschrieben. Das obere Diagramm zeigt wieder einen Verlauf der Raumtemperatur $T_R$ über einen Zeitraum von 60 Tagen. Das untere Diagramm entsprechend den Verlauf der Regelparameter ausgehend vom selben Initialwert $\Theta_0$, sowie gesuchten Satz optimaler Regelparameter $\Theta_{opt}$. In dem gezeigten Beispiel wird täglich eine Berechnung des Satzes optimierter Regelparameter durchgeführt, jeweils mit übertragenen und gespeicherten 96 Datenpaketen, sowie ausgehend von dem Satz der tags zuvor berechneten Regelparameter. Somit muss bei der Berechnung eine wesentlich geringere Menge von Daten verarbeitet werden. Ferner können die Datenpakete jeden Tag nach der Berechnung der optimierten Regelparameter wieder gelöscht werden, so dass im Vergleich mit der herkömmlichen Methode ein wesentlich kleinerer Speicherbedarf besteht. Wie der Verlauf der Regelparameter im unteren Diagramm der Fig. 5b illustriert, nähert sich das Ergebnis iterativ an den gesuchten optimalen Satz Regelparameter an. Das heißt, dass der Regler schon wesentlich früher als im Vergleichsbeispiel der Fig. 5a mit optimierten Regelparametern betrieben werden kann. Außerdem ist der Aufwand der Berechnung wesentlich geringer.

**Standard Least-Squares-Verfahren**

Ein erstes Ausführungsbeispiel für einen Berechnungsalgorithmus zum Berechnen eines Satzes optimierter Regelparameter verwendet ein Least-Squares-Verfahren. Bei einem herkömmlichen Least-Squares-Verfahren werden optimierte Regelparameter $\Theta$ ermittelt, indem das lineare Gleichungssystem:

$$A\Theta = b \qquad\qquad (1)$$

im Sinne von

$$\arg\min_{\Theta}\|A\Theta - b\|$$

gelöst wird. Dabei stellen die Matrizen $A$ und $b$ die sogenannten Datenmatrizen des zugrunde liegenden Schätzproblems dar. Typischerweise stehen mehr Datenpunkte und damit Zeilen der Datenmatrizen als zu schätzende Parameter zur Verfügung, so dass das vorliegende lineare Gleichungssystem überbestimmt ist. Ein solches herkömmliches Least-Sqaures-Verfahren wird beispielsweise in Stoer/Bulirsch: Numerische Mathematik 1, Springer Verlag, Berlin, 2007, S. 25Off beschrieben.

Aus Gleichung (1) folgt zunächst

$$A^T A\Theta = A^T b.$$

Unter der Annahme, dass $A^T A$ regulär ist, folgen die zu schätzenden Parameter aus

$$\Theta = (A^T A)^{-1} A^T b$$

mit

$$\Theta \epsilon \mathbb{R}^q, A \epsilon \mathbb{R}^{N \times q}, b \epsilon \mathbb{R}^N, N \gg q.$$

Eine Heizkennlinie wird wie oben beschrieben durch einen Satz mit den zwei Parametern Neigung $\theta_S$ und Niveau $\Theta_N$ charakterisiert. Die Anzahl der Parameter ist also $q = 2$. Damit ergibt sich:

$$A^T A \epsilon \mathbb{R}^{q \times q}, A^T b \epsilon \mathbb{R}^q$$

Mit den Abkürzungen

$$L := A^T A,$$

$$r := A^T b$$

lässt sich die die Lösung ebenfalls kompakt durch

$$\Theta = (A^T A)^{-1} A^T b = L^{-1} r$$

darstellen. Diese Darstellung bildet später den Ausgangspunkt für eine iterative Formulierung des Schätzproblems.

**Gewichtetes Least-Squares-Verfahren**

Das Standard-Least-Squares-Verfahren lässt sich noch weiter verallgemeinern, indem eine Gewichtung der einzelnen Zeilen der Datenmatrizen und damit der Datenpunkte vorgenommen wird. Eine detaillierte wissenschaftliche Abhandlung der in diesem und nächsten Abschnitt beschriebenen Verfahren wird beispielsweise in Ljung, L.: System Identification - Theory for the User, Prentice Hall, Upper Saddle River (1999) und R. Isermann und M. Münchhof: Identification of Dynamic Systems, Springer (2010) beschrieben.
Das gewichtete Least-Squares-Verfahren bildet später den theoretischen Ausgangspunkt für die Anwendung des Least-Squares Verfahrens auf die Optimierung der Heizkennlinie. Die Gewichtungs-Matrix lässt sich wie folgt darstellen

$$W := \begin{bmatrix} w_1 & & \\ & \ddots & \\ & & w_N \end{bmatrix},$$

wobei i.A. $w_i > 0$ und $W \epsilon \mathbb{R}^{q \times q}$ ist.
Zu lösen ist dann das gewichtete Least-Squares Problem:

$$\arg\min_{\Theta} \| W \cdot A\Theta - W \cdot b \|$$

Aus Gleichung (1) folgt dann unter der Annahme, dass $A^T W A$ regulär ist die Lösung zu

$$\Theta = (A^T \cdot W \cdot A)^{-1} A^T \cdot W \cdot b \qquad (2)$$

bzw. mit den Abkürzungen

$$L := A^T W A,$$

$$r := A^T W b$$

die kompakte Darstellung

$$\Theta = (A^T W A)^{-1} A^T W b = L^{-1} r.$$

## Iteratives Least-Squares-Verfahren

Bei den beiden zuvor dargestellten Ansätzen erweist sich als nachteilig, dass zuerst alle Datenpunkte und damit die Datenmatrizen $A$ und $b$ über den kompletten Zeitraum, beispielsweise einer Messung der Datenpakete $D_0$ bis $D_N$, wobei das Datenpaket $D_N$ das Ende des Messzeitraums festlegt, bestimmt werden müssen, was einen hohen Rechenaufwand erfordern kann. Für die großen Datenmengen müssen viel Speicherplatz sowie eine große Rechnerleistung bereitgestellt werden. Demgegenüber ist es daher vorteilhaft, bereits während der Messung, das heißt bei Vorliegen eines neuen Datenpakets, einen Satz optimierter Regelparameter zu bestimmen. Der hierfür benötigte Speicherplatz sowie die erforderliche Rechenleistung können wesentlich geringer ausfallen. Dies wird durch eine iterative Formulierung des Least-Squares Problems ermöglicht.

Für den iterativen Ansatz werden die Matrizen wie folgt dargestellt:

$$A = \begin{bmatrix} A_{k-1} \\ A_k \end{bmatrix}; b = \begin{bmatrix} b_{k-1} \\ b_k \end{bmatrix}; W = \begin{bmatrix} W_{k-1} & 0 \\ 0 & W_k \end{bmatrix}$$

Dabei ist die Aufteilung beispielsweise so zu interpretieren, dass Variablen mit dem Index $k$ - 1 Ergebnisse optimierter Regelparameter aus zurückliegenden Datenpaketen (Datenpakete bis zum Zeitpunkt $k$ - 1) darstellen. Der Index $k$ deutet somit auf ein neu erzeugtes Datenpaket $D_k$ hin, welches zur Aktualisierung neuer Regelparameter $\Theta_k$ heran gezogen wird.

Aus Gleichung Fehler! Verweisquelle konnte nicht gefunden werden. folgt somit:

$$\Theta_k = \left( \begin{bmatrix} A_{k-1}^T & A_k^T \end{bmatrix} \begin{bmatrix} W_{k-1} & \\ & W_k \end{bmatrix} \begin{bmatrix} A_{k-1} \\ A_k \end{bmatrix} \right)^{-1} \left( \begin{bmatrix} A_{k-1}^T & A_k^T \end{bmatrix} \begin{bmatrix} W_{k-1} & \\ & W_k \end{bmatrix} \begin{bmatrix} b_{k-1} \\ b_k \end{bmatrix} \right)$$

$$\Theta_k = \left( A_{k-1}^T W_{k-1} A_{k-1} + A_k^T W_k A_k \right)^{-1} \left( A_{k-1}^T W_{k-1} b_{k-1} + A_k^T W_k b_k \right)$$

Mit den Abkürzungen

$$L_k := A_k^T W_k A_k$$

$$r_k := A_k^T W_k b_k$$

kann Gleichung (*1*) somit kompakt durch

$$\Theta_k = (L_{k-1} + L_k)^{-1} (r_{k-1} + r_k)$$

dargestellt werden.

Der Ablauf eines Verfahrens zum Berechnen von $\Theta_k$ kann folgendermaßen am Beispiel der Datenpakete $D_0$ bis $D_N$ zusammengefasst werden.

1. Für das Datenpaket $D_0$ werden in einem ersten Schritt $L_0 := A_0^T W_0 A_0$ und $r_0 := A_0^T W_0 b_0$ berechnet. Daraus lässt sich

$$\Theta_0 = (L_0)^{-1} (r_0)$$

bestimmen.

2. In einem zweiten Schritt werden für das Datenpaket $D_1$ $L_1 := A_1^T W_1 A_1$ und $r_1 := A_1^T W_1 b_1$ berechnet und daraus

$$\Theta_1 = (L_0 + L_1)^{-1}(r_0 + r_1)$$

bestimmt.

3. Entsprechend werden in einem dritten Schritt für das Datenpaket $D_k$ $L_k := A_k^T W_k A_k$ und $r_k := A_k^T W_k b_k$ berechnet. Hieraus kann

$$\Theta_k = (L_{k-1} + L_k)^{-1}(r_{k-1} + r_k)$$

berechnet werden.

4. Anschließend wird $L_{k-1} \rightarrow L_{k-1} + L_k$ und $r_{k-1} \rightarrow r_{k-1} + r_k$ gesetzt und die Laufvariable $k$ um eins erhöht.

5. Wenn $k = N + 1$ wird, so wird das Verfahren beendet. Ansonsten kehrt man zurück zum Schritt 3.

Für das Beispiel der Heizkennlinienoptimierung folgt:

$$A_k \epsilon \mathbb{R}^{N \times q}$$

$$L_k \epsilon \mathbb{R}^{q \times q}$$

$$r_k \epsilon \mathbb{R}^q$$

$$b_k \epsilon \mathbb{R}^N$$

$$\Theta_k \epsilon \mathbb{R}^q$$

Bei einer täglichen Berechnung mit einer Zeitauflösung von 15 Minuten sind die Parameter $N$ = 96; $q$ = 2. Im Speichermedium 7 des Servers 8 müssen nur die Parameter $\Theta_k$, $L_{k-1}, r_{k-1}$ gespeichert werden, so dass im Vergleich mit einem herkömmlichen Verfahren deutlich weniger Speicherbedarf besteht. Grundsätzlich können mit dem beschriebenen erfindungsgemäßen Verfahren alle Parameteroptimierungsprobleme einer Regelung, die sich durch Gleichung (1) darstellen lassen, effizient auf dem Server 8 verwaltet und berechnet werden.

**Anwendung auf eine Heizkennlinie**

Im Folgenden wird gezeigt, wie sich das zuvor beschriebene Verfahren bei der Optimierung einer Heizkennlinie anwenden lässt. Eine Heizkennlinie beschreibt einen statischen Zusammenhang zwischen Außentemperatur $T_A$, Raumsolltemperatur $T_{R,W}$ und Vorlaufsolltemperatur $T_{VL,W}$ und wird beschrieben durch Gleichung (3):

$$T_{VL,W} = T_{R,W} + \theta_L - \theta_S \left( \sum_{\alpha=1}^{3} (T_A - T_{R,W})^\alpha \cdot a_\alpha \right) \qquad (3)$$

Darin sind $a_\alpha$ bekannte, zuvor festgelegte Parameter der Heizkurve.

Aus Gleichungen (1) und (3) ergeben sich die Datenmatrizen:

$$b := \vec{T}_{VL,W} - \vec{T}_{R,W}$$

$$A := \left[ \begin{bmatrix} 1 \\ \vdots \\ 1 \end{bmatrix}, -1 \cdot \left( \sum_{\alpha=1}^{3} (\vec{T}_A - \vec{T}_{R,W})^\alpha \cdot a_\alpha \right) \right]$$

mit den zu bestimmenden Parametern

$$\Theta := \begin{bmatrix} \theta_L \\ \theta_S \end{bmatrix}$$

**Regelabweichungen**

$$e_{VL} := T_{VL,W} - T_{VL}$$

$$e_R := T_{R,W} - T_R$$

Mit den in Fig. 2a dargestellten Temperatursensoren werden in regelmäßigen Zeitintervallen die Messwerte $T_{VL}(t)$, $T_A(t)$, $T_R(t)$, $T_{VL,W}(t)$, $T_{R,w}(t)$ aufgenommen und in Datenpaketen als Zeitreihe an den Server 8 übertragen und dort gespeichert und ausgewertet. Fig. 4 illustriert wie aus den Messwerten eine Heizkennlinie ermittelt werden kann. In Fig. 4 sind die Messwerte in einem Diagramm aufgetragen. Die aufgetragenen aus den Messwerten gewonnenen Datenpunkte können zudem unter Verwendung einer Gewichtungsfunktion gefiltert werden, so dass nur solche Datenpunkte verwendet werden, bei denen die Abweichungen $e_{VL}$ und/oder $e_R$ sehr klein sind. Die an die Datenpunkte gefittete Heizkennlinie liefert dann die optimierten Regelparameter $\Theta_k$, die an den Heizregler 3 übertragen werden können.

Als Gewichtungsfunktion kann zum Beispiel eine Gauss'sche Verteilungskurve verwendet werden:

$$w_{\{VL,R\},i} = \exp\left( -\frac{e^2_{\{VL,R\},i}}{2\sigma_{\{VL,R\}}} \right)$$

Die Einstellparameter $\sigma_{VL}$ und $\sigma_R$ sind im Wesentlichen frei wählbar. Je nach Menge der für die Auswertung verfügbaren Datenpakete beziehungsweise in Abhängigkeit der Streuung der Messwerte, können die Einstellparameter größer oder kleiner eingestellt werden, um einen Satz optimierter Regelparameter $\Theta_k$ zu ermitteln.

**Zweites Ausführungsbeispiel: Systemidentifikation**

In Abgrenzung zur Heizkennlinie des ersten Ausführungsbeispiels behandelt das zweite Ausführungsbeispiel eine explizite Regelung der Temperatur $T_R$ eines Referenzraums 9 eines Gebäudes. Das zweite Ausführungsbeispiel beschreibt, wie internetgestützt und ausgehend von den gespeicherten Datenpaketen, ein dynamisches Modell M bestimmt werden kann. Das Modell M ist eine mathematische Beschreibung der Zusammenhänge zwischen der Vorlauftemperatur $T_{VL}$ und der Außentemperatur $T_A$ auf die Raumtemperatur $T_R$. Das Modell wird auf Grundlage der gemessenen Daten bestimmt.

Das Erzeugen und Übertragen der Datenpakete an einen Server 8 erfolgt wie schon zuvor anhand des ersten Ausführungsbeispiels beschrieben. Im Folgenden wird daher nur auf die Details der mathematischen Methode zum Berechnen der optimierten Regelparameter $\Theta_k$ eingegangen.

Ein mathematisches Gebäudemodell ermöglicht ein gezieltes Optimieren der Regelparameter eines Reglers 3 einer HLKK-Anlage 2, zum Beispiel mittels eines P-, PI- oder PID-Reglers, auf Grundlage des Modells. Die Optimierung kann beispielsweise durch regelungstechnische Standardverfahren wie Wurzelortskurve, Frequenzlinienverfahren, etc. erfolgen. Das Bestimmen der Parameter des Gebäudemodells und das Berechnen der optimierten Regelparameter $\Theta_k$ erfolgt wie im ersten Ausführungsbeispiel auf einem Server 8, der über eine Internetverbindung mit dem Regler 3 kommuniziert. Der Regler 3 selbst arbeitet lokal, zum Beispiel im Wärmeerzeuger eines Heizungssystems 2, und wird in regelmäßigen Abständen (z.B. täglich, wöchentlich oder monatlich) automatisiert neu parametriert.

Gemäß dem zweiten Ausführungsbeispiel der Erfindung werden die Regelparameter anhand eines Modells M der Regelstrecke optimiert. Dazu bestimmt ein auf dem Server 8 ausgeführter Berechnungsalgorithmus einen mathematischen Zusammenhang zwischen den Eingangs- und Ausgangsdaten des Regelprozesses anhand der gewonnenen Messdaten, also den Datenpaketen $D_k$.

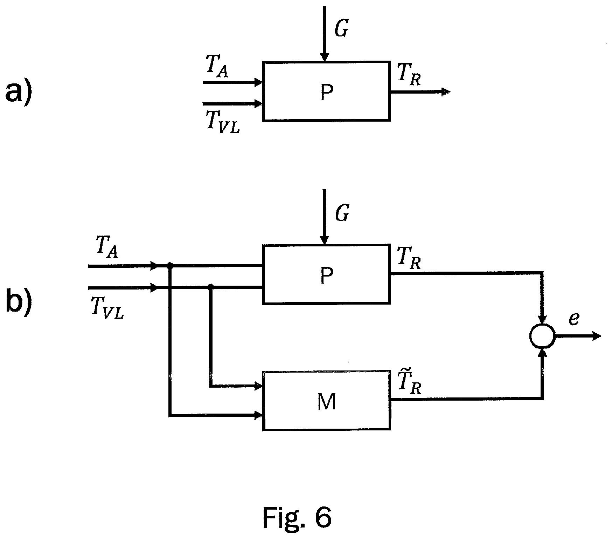

Fig. 6a zeigt die Ausgangssituation bei einem beispielhaften Prozess P, hier ein Heizkreis. Die Außentemperatur $T_A$ ist eine messbare Störgröße. Die Vorlauftemperatur $T_{VL}$ des Heizkreises ist die Eingangsgröße. Die Raumtemperatur $T_R$ ist die Ausgangs- beziehungsweise Regelgröße. Weitere, nicht messbare, Störgrößen werden mit $G = [g_1, \ldots g_q]$ bezeichnet.

Ziel des Verfahrens ist es, ein mathematisches Modell M zu bestimmen, so dass die durch das Modell M gelieferte Ausgangsgröße $\tilde{T}_R$ möglichst exakt der gemessenen Raumtemperatur $T_R$ entspricht, wie in Fig. 6b schematisch dargestellt. Das Ziel ist also, die Abweichung e zwischen der Ausgangsgröße $\tilde{T}_R$ und der gemessenen Raumtemperatur $T_R$ zu minimieren.

Als einfacher Ansatz für das Modell M können zum Beispiel eine zeitdiskrete Übertragungsfunktion im Frequenzbereich für die Vorlauftemperatur $G_{VL}(Z)$ und eine zeitdiskrete Übertragungsfunktion für die Außentemperatur $G_A(Z)$ gewählt werden, woraus

$$T_R(Z) = G_{VL}(Z) \cdot T_{VL}(Z) + G_A(Z) \cdot T_A(Z)$$

folgt. Die Zeit $t$ wird im Folgenden als ein Vielfaches einer Abtastzeit $t_S$ ausgedrückt, so dass: $t = k \cdot t_S$. Die zeitdiskrete Übertragungsfunktion im Frequenzbereich wird hier als zeitdiskrete Übertragungsfunktion im Bildbereich einer Z-Transformation ausgedrückt.

Der Übertragungsfunktion im Frequenzbereich entspricht im Zeitbereich die Differenzengleichung

$$T_R(k \cdot t_S) = -\sum_{i=0}^{N_p-1} a_i T_R\left(\left(k - N_p + i\right)t_S\right)$$
$$+ \sum_{i=0}^{N_{Z,VL}} b_{VL,i} T_{VL}\left(\left(k - N_{Z,VL}{}^{-1} + i\right)t_S\right) \qquad (4)$$
$$+ \sum_{i=0}^{N_{Z,A}} b_{A,i} T_A\left(\left(k - N_{Z,A}{}^{-1} + i\right)t_S\right)$$

$$k \epsilon \{0,1,\ldots\}; \ N_{Z,VL} \leq N_p; N_{Z,A} \leq N_p$$

Darin ist $N_p$ die Anzahl Polstellen der Übertragungsfunktion und $N_{Z,VL}$ bzw. $N_{Z,A}$ ist jeweils die Anzahl entsprechender Nullstellen. Diese sind prinzipiell frei wählbar, lassen sich aber in der Regel aus physikalischen Überlegungen vorab festlegen.

Das mathematische Modell M berechnet den Modellausgang anhand von Vergangenheitswerten der Außentemperatur $T_A$ und Raumtemperatur $T_R$, welche als Datenpakete im Speichermedium 7 des Servers 8 gespeichert sind. Die Berechnung der Modellparameter $a_i$, $b_{VL,i}$, $b_{A,i}$ lässt sich wiederum wie im ersten Ausführungsbeispiel als ein Least-Squares-Problem darstellen: $A\Theta = b$. Die Matrizen A und b können aus den Datenpaketen $D_i$ erzeugt werden. Bei Kenntnis weiterer Störgrößen, wie beispielsweise der Sonneneinstrahlung $G_{sol}$ oder eines Fremdwärmequelleneintrags $P_{FW}$ kann das Modell entsprechend erweitert werden.

Um die Modellparameter zu berechnen wird das Problem in ein Least-Squares-Problem überführt. Dazu werden die Datenpakete $D_1$ bis $D_N$ verwendet. Bei einer Abtastzeit $t_S$ von beispielsweise 15 Minuten, wird entsprechend für einen Tag $N = 96$ angesetzt. Somit ist:

$$k = 1, \ldots, 96$$

$$N_p = 2$$

$$N_{Z,VL} = 1$$

$$N_{Z,A} = 1$$

Aus Gleichung (4) folgt:

$$T_R(k) = -a_1 T_R(k-1) - a_0 T_R(k-2) + b_{VL,1} T_{VL}(k-1) + b_{VL,0} T_{VL}(k-2) + b_{A,1} T_A(k-1)$$
$$+ b_{A,0} T_A(k-2)$$

Aus $D_1, \dots D_N$ folgt damit:

$$\begin{bmatrix} T_R(1) \\ \vdots \\ T_R(N) \end{bmatrix}$$

$$= \begin{bmatrix} -a_1 T_R(0) - a_0 T_R(-1) + b_{VL,1} T_{VL}(0) + b_{VL,0} T_{VL}(-1) + b_{A,1} T_A(0) + b_{A,0} T_A(-1) \\ \vdots \\ -a_1 T_R(N-1) - a_0 T_R(N-2) + b_{VL,1} T_{VL}(N-1) + b_{VL,0} T_{VL}(N-2) + b_{A,1} T_A(N-1) + b_{A,0} T_A(N-2) \end{bmatrix}$$

$$= \begin{bmatrix} -T_R(0) & -T_R(-1) & T_{VL}(0) & T_{VL}(-1) & T_A(0) & T_A(-1) \\ \vdots & \vdots & \vdots & \vdots & \vdots & \vdots \\ -T_R(N-1) & -T_R(N-2) & T_{VL}(N-1) & T_{VL}(N-2) & T_A(N-1) & T_A(N-2) \end{bmatrix} \cdot \begin{bmatrix} a_1 \\ a_0 \\ b_{VL,1} \\ b_{VL,0} \\ b_{A,1} \\ b_{A,0} \end{bmatrix}$$

$$= A \cdot \Theta$$

Die Matrizen $A$ und $b$ können also aus den an den Server 8 übertragenen Datenpaketen $D_i$ erzeugt werden. Aus den Regelparametern $\Theta = [a_1, a_0, \dots, b_{A,0}]$ können die Übertragungsfunktionen $G_{VL}(Z)$ und $G_A(Z)$ berechnet werden. Sind die Übertragungsfunktionen $G_{VL}(Z)$ und $G_A(Z)$ bekannt, so kann ein Regler 3 (zum Beispiel ein P-, PI- oder PID-Regler) zum Regeln der Raumtemperatur $T_R$ entworfen werden. Dies kann anhand von Standardverfahren der Regeltechnik modellbasiert erfolgen, zum Beispiel durch eine Wurzelortskurve, eine Frequenzkennlinie oder ähnliches.

Da die Parameter des Modells M zyklisch aktualisiert werden, zum Beispiel täglich, wöchentlich oder monatlich, ergibt sich eine adaptive, beziehungsweise eine an den Prozess (hier ein Heizkreis) angepasste, optimierte Regelung der Heizungsanlage 2. Die Regelparameter des Reglers 3 werden entsprechend zyklisch aktualisiert. Somit kann eine kontinuierliche, internetbasierte Optimierung des Reglers 3 erfolgen.

Als Vorteil und Neuerung des Verfahrens ergibt sich, dass eine Vorhaltung und Verarbeitung zum Zwecke der Identifikation der Parameter auf den eingebetteten Systemen des Wärmeerzeugers entfällt, da diese Berechnungen auf den entsprechenden Kapazitäten der zentralen Plattform im Internet erfolgen.

Die in der vorstehenden Beschreibung, den Ansprüchen und den Zeichnungen offenbarten Merkmale können sowohl einzeln als auch in beliebiger Kombination für die Verwirklichung der Erfindung in ihren verschiedenen Ausgestaltungen von Bedeutung sein.

**Bezugszeichenliste**

| | |
|---|---|
| 1 | System zum Ermitteln optimierter Regelparameter |
| 2 | HLKK-Anlage |
| 3 | Regler/Steuerung |
| 4 | Heizkreisregler |
| 5 | Kesselregler |
| 6 | Puffer (Speichermedium) |
| 7 | Datenbank (Speichermedium) |
| 8 | Server |
| 9 | Raum |
| 10 | Raumtemperatursensor |

| 11 | Außentemperatursensor |
|---|---|
| 12 | Vorlauftemperatursensor |
| 13 | Massenstromsensor |
| 14 | Sonnenstrahlsensor |
| 15 | Rücklauftemperatursensor |
| 16 | Heizkörper |
| 17 | Thermostat |
| 20 | Schnittstelle des Reglers |
| 21 | Schnittstelle des Servers |
| 22 | Einrichtung zum Erzeugen von Datenpaketen |
| CPU | Prozessor |
| B | Benutzer |

**Patentansprüche**

1. Verfahren zum Ermitteln eines Satzes optimierter Regelparameter ($\Theta_k$) eines Reglers (3) oder einer Steuerung für eine HLKK- (Heizungs-, Lüftungs-, Klima- und Kältetechnik) Anlage (2) mit den folgenden Schritten:

Erfassen einer Außentemperatur ($T_A$);
Erfassen einer Raumisttemperatur ($T_R$) eines Raumes (9);
Erfassen einer Vorlauftemperatur ($T_{VL}$);
Erfassen einer vorgegebenen Raumsolltemperatur ($T_{R,W}$);
Erfassen einer vorgegebenen Vorlaufsolltemperatur ($T_{VL,W}$);
Erzeugen eines Datenpakets ($D_k$) mit den genannten erfassten Temperaturen ($T_A$, $T_R$, $T_{VL}$ und vorgegebenen Solltemperaturen ($T_{R,W}$, $T_{VL,W}$) und einem Zeitpunkt ($t_k$) des Erfassens;
Übertragen des Datenpakets ($D_k$) an einen Server (8) über eine Internetverbindung; und
Speichern des Datenpakets ($D_k$) in einem mit dem Server (8) verbundenen Speichermedium (6, 7),
**gekennzeichnet durch**:

Berechnen eines Satzes optimierter Regelparameter ($\Theta_k$) anhand der Messwerte ($T_A$, $T_R$, $T_{R,W}$, $T_{VL}$, $T_{VL,W}$) des übertragenen und gespeicherten Datenpakets ($D_k$) und anhand:

von Messwerten ($T_A$, $T_R$, $T_{R,W}$, $T_{VL}$, $T_{VL,W}$) einer Vielzahl weiterer zu früheren Zeitpunkten ($t_{0...k}$) eines festgelegten Zeitraums ($\Delta t$) erzeugter Datenpakete ($D_{0...k}$) und/oder
mindestens eines einer Vielzahl zuvor ermittelter Sätze optimierter Regelparameter ($\Theta_{k-1}$);

wobei das Berechnen des Satzes optimierter Regelparameter ($\Theta_k$) durch Ausführen eines Berechnungsalgorithmus auf dem Server (8) erfolgt;
Speichern des berechneten Satzes optimierter Regelparameter ($\Theta_k$) in dem mit dem Server (8) verbundenen Speichermedium (6, 7); und
Übertragen des berechneten Satzes optimierter Regelparameter ($\Theta_k$) vom Server (8) an den Regler (3) oder die Steuerung der HLKK-Anlage (2) über die Internetverbindung oder Senden einer Benachrichtigung an einen Benutzer (B) der HLKK-Anlage (2) mit dem berechneten Satz optimierter Regelparameter ($\Theta_k$).

2. Verfahren nach Anspruch 1, wobei das Verfahren ferner umfasst:
Erfassen mindestens eines weiteren Werts zum Zeitpunkt ($t_k$) aus der Gruppe:

Rücklauftemperatur ($T_{RL}$);
Massenstrom ($\dot{m}$);
Sonneneinstrahlung ($G_{sol}$);
Fremdwärmequelleneintrag ($P_{FW}$);

wobei das erzeugte Datenpaket ($D_k$) den oder die weitere(n) Messwert(e) ($T_{RL}$, $\dot{m}$, $G_{sol}$, $P_{FW}$) umfasst, und der Berechnungsalgorithmus den Satz optimierter Regelparameter ($\theta_k$) mindestens anhand eines der weiteren Messwerte ($T_{RL}$, $\dot{m}$, $G_{sol}$, $P_{FW}$) ermittelt.

3. Verfahren nach Anspruch 1 oder 2, wobei der beim Berechnen des Satzes optimierter Regelparameter ($\Theta_k$) ver-

wendete Zeitraum ($\Delta t$) in Abhängigkeit der Anzahl in dem Speichermedium (6, 7) gespeicherter Datenpakete ($D_{0...k}$) vorgegeben wird.

4. Verfahren nach mindestens einem der vorhergehenden Ansprüche, wobei das Berechnen des Satzes optimierter Regelparameter ($\Theta_k$) umfasst:

   Ermitteln einer ersten Abweichung ($e_R$) zwischen der Raumisttemperatur ($T_R$) und der Raumsolltemperatur ($T_{R,W}$) für jedes Datenpaket ($D_{0...k}$) eines vorgegebenen Zeitraums ($\Delta t$);
   Ermitteln einer zweiten Abweichung ($e_{VL}$) zwischen der Vorlauftemperatur ($T_{VL}$) und der vorgegebenen Vorlauftemperatur ($T_{VL,W}$) für jedes Datenpaket ($D_{0...k}$) des vorgegebenen Zeitraums ($\Delta t$);und
   Bestimmen und Anwenden eines Gewichtungsfaktors zwischen 0 und 1 in Abhängigkeit der ermittelten Abweichungen ($e_R, e_{VL}$), so dass beim Berechnen des Satzes optimierter Regelparameter ($\Theta_k$) Datenpakete ($D_{0...k}$) mit niedriger Abweichung stärker berücksichtig werden und Datenpakete ($D_{0...k}$) mit hoher Abweichung schwächer berücksichtig werden; oder
   Berechnen des Satzes optimierter Regelparameter ($\Theta_k$) aus gespeicherten Datenpaketen ($D_{0...k}$), für welche die ermittelte erste Abweichung ($e_R$) und/oder die ermittelte zweite Abweichung ($e_{VL}$) kleiner als oder gleich groß wie ein jeweils vorgegebener Schwellenwert ($\delta_R$, $\delta_{VL}$) sind/ist.

5. Verfahren nach mindestens einem der vorhergehenden Ansprüche, wobei das Erfassen der Messwerte regelmäßig nach Ablauf eines vorgegebenen Zeitintervalls erfolgt, und das Berechnen des Satzes optimierter Regelparameter ($\Theta_k$) wiederkehrend jeweils dann ausgeführt wird, wenn eine vorbestimmte Vielzahl vorgegebener Zeitintervalle abgelaufen ist, so dass eine entsprechende Vielzahl erzeugter Datenpakte ($D_{0...k}$) zum Berechnen des Satzes optimierter Regelparameter ($\Theta_k$) im Speichermedium (6, 7) des Servers (8) gespeichert vorliegt.

6. System (1) zum Ermitteln eines Satzes optimierter Regelparameter ($\Theta_k$) eines Reglers (3) oder einer Steuerung für eine HLKK- (Heizungs-, Lüftungs-, Klima- und Kältetechnik) Anlage (2), umfassend:

   einen Außentemperatursensor (11) zum Erfassen einer Außentemperatur ($T_A$);
   einen Raumtemperatursensor (10) zum Erfassen einer Raumisttemperatur ($T_R$), der in einem Raum (9) angeordnet ist;
   einen Vorlauftemperatursensor (12) zum Erfassen einer Vorlauftemperatur ($T_{VL}$);
   eine Einrichtung (17) zum Vorgeben einer Raumsolltemperatur ($T_{R,W}$);
   eine Einrichtung (4) zum Vorgeben einer Vorlaufsolltemperatur ($T_{VL,W}$);
   eine Einrichtung (22) zum Erzeugen eines Datenpakets ($D_k$) mit den genannten erfassten Temperaturen ($T_A$, $T_R$, $T_{vd}$ und vorgegebenen Solltemperaturen ($T_{R,W}$, $T_{VL,W}$) und einem Zeitpunkt ($t_k$) des Erfassens;
   eine Übertragungseinrichtung mit einer Schnittstelle (20) zum Übertragen des Datenpakets ($D_k$) an einen Server (8) über eine Internetverbindung; und
   ein mit dem Server (8) verbundenes Speichermedium (6, 7) zum Speichern des Datenpakets ($D_k$),
   **dadurch gekennzeichnet, dass** der Server (8) einen Prozessor (CPU) aufweist, der dazu konfiguriert ist:

   einen Satz optimierter Regelparameter ($\Theta_k$) zu berechnen anhand von Messwerten ($T_A$, $T_R$, $T_{R,W}$, $T_{VL}$, $T_{VL,W}$) des übertragenen und gespeicherten Datenpakets ($D_k$) des Zeitpunkts ($t_k$) und anhand:

   von Messwerten ($T_A$, $T_R$, $T_{R,W}$, $T_{VL}$, $T_{VL,W}$) einer Vielzahl weiterer zu früheren Zeitpunkten ($t_{0...k-1}$) eines festgelegten Zeitraums ($\Delta t$) erzeugter Datenpakete ($D_{0...k-1}$) und/oder
   mindestens eines einer Vielzahl zuvor ermittelter Sätze von Regelparametern ($\Theta_{k-1}$);
   wobei der Prozessor (CPU) dazu konfiguriert ist, einen Berechnungsalgorithmus zum Berechnen des Satzes optimierter Regelparameter ($\Theta_k$) auszuführen;

   den berechneten Satz optimierter Regelparameter ($\Theta_k$) in dem mit dem Server (8) verbundenen Speichermedium (6, 7) zu speichern; und
   den berechneten Satz optimierter Regelparameter ($\Theta_k$) über eine Schnittstelle (21) über die Internetverbindung an den Regler (3) oder die Steuerung der HLKK-Anlage (2) zu übertragen oder eine Benachrichtigung mit dem berechneten Satz optimierter Regelparameter ($\Theta_k$) an einen Benutzer (B) der HLKK-Anlage (2) zu senden.

7. System (1) nach Anspruch 6, wobei das System (1) ferner umfasst:

einen Rücklauftemperatursensor (15) zum Ermitteln einer Rücklauftemperatur ($T_{RL}$); und/oder einen Massenstromsensor (13) zum Erfassen eines Massenstroms ($\dot{m}$); und/oder einen Sonnenstrahlsensor (14) zum Erfassen einer Sonneneinstrahlung ($G_{sol}$); und/oder eine Einrichtung zum Erfassen eines Fremdwärmequelleneintrags ($P_{FW}$); und/oder

wobei die Einrichtung (22) zum Erzeugen eines Datenpakets dazu konfiguriert ist, das Datenpaket ($D_k$) mit dem/den weiteren Messwerte(n) ($T_{RL}, \dot{m}, G_{sol}, P_{FW}$) zu erzeugen, und der Prozessor (CPU) dazu ausgelegt ist, den Satz optimierter Regelparameter ($\Theta_k$) mindestens anhand eines der weiteren Messwerte ($T_{RL}, \dot{m}, G_{sol}, P_{FW}$) zu berechnen.

8.  System (1) nach Anspruch 6 oder 7, wobei der Prozessor (CPU) des Servers (8) dazu konfiguriert ist, den beim Berechnen des Satzes optimierter Regelparameter ($\Theta_k$) verwendeten Zeitraum ($\Delta t$) in Abhängigkeit der Anzahl gespeicherter Datenpakete ($D_{0...k}$) vorzugeben.

9.  System (1) nach mindestens einem der Ansprüche 6 bis 8, wobei der Prozessor (CPU) des Servers (8) dazu konfiguriert ist:

    eine erste Abweichung ($e_R$) zwischen Raumisttemperatur ($T_R$) und Raumsolltemperatur ($T_{R,W}$) für jedes Datenpaket ($D_{0...k}$) eines vorgegebenen Zeitraums ($\Delta t$) zu ermitteln;
    eine zweite Abweichung ($e_{VL}$) zwischen Vorlauftemperatur ($T_{VL}$) und vorgegebener Vorlauftemperatur ($T_{VL,W}$) für jedes Datenpaket ($D_{0...k}$) des vorgegebenen Zeitraums ($\Delta t$) zu ermitteln; und
    einen Gewichtungsfaktors (w) zwischen 0 und 1 in Abhängigkeit der ermittelten Abweichungen ($e_R, e_{VL}$) zu bestimmen und anzuwenden, so dass beim Berechnen des Satzes optimierter Regelparameter ($\Theta_k$) Datenpakete ($D_{0...k}$) mit niedriger Abweichung stärker berücksichtig werden und Datenpakete ($D_{0...k}$) mit hoher Abweichung schwächer berücksichtig werden; oder
    den Satz optimierter Regelparameter ($\Theta_k$) aus den gespeicherten Datenpaketen ($D_{0...k}$), für welche die ermittelte erste Abweichung ($e_R$) und/oder die ermittelte zweite Abweichung ($e_{VL}$) kleiner als oder gleich groß wie ein jeweils vorgegebener Schwellenwert ($\delta_R, \delta_{VL}$)ist, zu ermitteln.

10. System (1) nach mindestens einem der Ansprüche 6 bis 9, wobei die Sensoren die Messwerte regelmäßig nach Ablauf eines vorgegebenen Zeitintervalls erfassen, und der Prozessor (CPU) des Servers (8) dazu konfiguriert ist, den Satz optimierter Regelparameter ($\Theta_k$) wiederkehrend jeweils dann zu berechnen, wenn eine vorbestimmte Vielzahl vorgegebener Zeitintervalle abgelaufen ist, so dass eine entsprechende Vielzahl erzeugter Datenpakte ($D_{0...k}$) zum Berechnen des Satzes optimierter Regelparameter ($\Theta_k$) im Speichermedium (6, 7) des Servers (8) gespeichert vorliegt.

**Claims**

1.  A method for determining a set of optimized control parameters ($\theta_k$) of a closed-loop controller (3) or an open-loop controller for a HVACR (heating, ventilation, air conditioning and refrigeration) system (2), comprising the following steps:

    detecting an outside temperature ($T_A$);
    detecting an actual room temperature ($T_R$) of a room (9);
    detecting a supply temperature ($T_{VL}$);
    detecting a preset target room temperature ($T_{R,W}$);
    detecting a preset target supply temperature ($T_{VL,W}$);
    generating a data packet ($D_k$) with said detected measurement values ($T_A, T_R, T_{R,W}, T_{VL}, T_{VL,W}$) and a time ($t_k$) of detection;
    transmitting said data packet ($D_k$) to a server (8) via an internet connection;
    storing said data packet ($D_k$) in a storage medium (6, 7) connected to said server (8);
    **characterized by**:

    calculating a set of optimized control parameters ($\Theta_k$) based on the measurement values ($T_A, T_R, T_{R,W}, T_{VL}, T_{VL,W}$) of the transmitted and stored data packet ($D_k$) and based on:

    measurement values ($T_A, T_R, T_{R,W}, T_{VL}, T_{VL,W}$) of a plurality of further data packets ($D_{0...k}$) generated at earlier times ($t_{0...k}$) of a specific period ($\Delta t$); and/or

at least one of a plurality of previously determined sets of optimized control parameters ($\Theta_{k-1}$);

wherein the set of optimized control parameters ($\Theta_k$) is calculated by executing a calculation algorithm on said server (8);
storing the calculated set of optimized control parameters ($\Theta_k$) in said storage medium (6, 7) connected to said server (8); and
transmitting the calculated set of optimized control parameters ($\Theta_k$) from said server (8) to the closed-loop controller (3) or the open-loop controller of said HVACR system (2) via the internet connection or sending a notification to a user (B) of said HVACR system (2) with the calculated set of optimized control parameters ($\Theta_k$).

2. The method according to claim 1, said method further comprising:

detecting, at the time ($t_k$), at least one further value from the group of:

return temperature ($T_{RL}$);
mass flow ($\dot{m}$);
solar irradiation ($G_{sol}$);
external heat source input ($P_{FW}$);

wherein the generated data packet ($D_k$) includes the further measurement value(s) ($T_{RL}$, $\dot{m}$, $G_{sol}$, $P_{FW}$), and the calculation algorithm determines the set of optimized control parameters ($\Theta_k$) based on at least one of the further measurement values ($T_{RL}$, $\dot{m}$, $G_{sol}$, $P_{FW}$).

3. The method according to claim 1 or 2, wherein the time period ($\Delta t$) used in calculating the set of optimized control parameters ($\Theta_k$) is preset based on the number of data packets ($D_{O...k}$) stored in said storage medium (6, 7).

4. The method according to at least one of the preceding claims, wherein calculating the set of optimized control parameters ($\Theta_k$) comprises:

determining a first deviation ($e_R$) between the actual room temperature ($T_R$) and the target room temperature ($T_{R,W}$) for each data packet ($D_{0...k}$) of a preset time period ($\Delta t$);
determining a second deviation ($e_{VL}$) between the supply temperature ($T_R$) and the preset supply temperature ($T_{VL,W}$) for each data packet ($D_{0...k}$) of the preset time period ($\Delta t$); and
determining and applying a weighting factor between 0 and 1 dependent on the determined deviations ($e_R$, $e_{VL}$) such that, when calculating the set of optimized control parameters ($\Theta_k$), data packets ($D_{0...k}$) with low deviation are taken into account more and data packets ($D_{O...k}$) with high deviation are taken into account less; or calculating the set of optimized control parameters ($\Theta_k$) from stored data packets ($D_{O...k}$) for which the determined first deviation ($e_R$) and/or the determined second deviation ($e_{VL}$) is/are less than or equal to a respectively preset threshold value ($\delta_R$, $\delta_{VL}$).

5. The method according to at least one of the preceding claims, wherein the measurement values are detected periodically after a preset time interval has elapsed, and the set of optimized control parameters ($\Theta_k$) is calculated recurrently each time a predetermined plurality of preset time intervals have elapsed so that a corresponding plurality of generated data packets ($D_{O...k}$) for calculating the set of optimized control parameters ($\Theta_k$) are stored in said storage medium (6, 7) of said server (8).

6. A system (1) for determining a set of optimized control parameters ($\Theta_k$) of a closed-loop controller (3) or an open-loop controller for an HVACR (heating, ventilation, air conditioning and refrigeration) system (2) comprising:

an outside temperature sensor (11) for detecting an outside temperature ($T_A$);
a room temperature sensor (10) arranged in a room (9) for detecting an actual room temperature ($T_R$);
a supply temperature sensor (12) for detecting a supply temperature ($T_{VL}$);
means (17) for presetting a target room temperature ($T_{R,W}$);
means (4) for presetting a target supply temperature ($T_{VL,W}$);
means (22) for generating a data packet ($D_k$) with said detected measurement values ($T_A$, $T_R$, $T_{R,W}$, $T_{VL}$, $T_{VL,W}$) and a time ($t_k$) of detection;
transmission means including an interface (20) for transmitting said data packet ($D_k$) to a server (8) via an internet connection; and

a storage medium (6, 7) connected to said server (8) for storing said data packet ($D_k$);

**characterized in that** said server (8) comprises a processor (CPU) configured to:

calculate a set of optimized control parameters ($\Theta_k$) based on measurement values ($T_A$, $T_R$, $T_{R,W}$, $T_{VL}$, $T_{VL,W}$) of the transmitted and stored data packet ($D_k$) of the time ($t_k$) and based on:

measurement values ($T_A$, $T_R$, $T_{R,W}$, $T_{VL}$, $T_{VL,W}$) of a plurality of further data packets ($D_{O...k-1}$) generated at earlier times ($t_{O...k-1}$) of a specified time period ($\Delta t$); and/or

at least one of a plurality of previously determined sets of control parameters ($\Theta_{k-1}$);

wherein said processor (CPU) is configured to execute a calculation algorithm for calculating the set of optimized control parameters ($\Theta_k$);

store the calculated set of optimized control parameters ($\Theta_k$) in said storage medium (6, 7) connected to said server (8); and

transmit the calculated set of optimized control parameters ($\Theta_k$) via an interface (21) via the internet connection to the closed-loop controller (3) or the open-loop controller of said HVACR system (2) or send a notification with the calculated set of optimized control parameters ($\Theta_k$) to a user (B) of said HVACR system (2).

7. The system (1) according to claim 6, said system (1) further comprising:

a return temperature sensor (15) for determining a return temperature ($T_R$L); and/or

a mass flow sensor (13) for detecting a mass flow ($\dot{m}$); and/or

a solar irradiation sensor (14) for detecting a solar irradiation ($G_{sol}$); and/or

means for detecting an external heat source input ($P_{FW}$);

wherein said means (22) for generating a data packet is configured to generate said data packet ($D_k$) with the further measurement value(s) ($T_{RL}$, $\dot{m}$, $G_{sol}$, $P_{FW}$), and said processor (CPU) is configured to calculate the set of optimized control parameters ($\Theta_k$) based on at least one of the further measurement values ($T_{RL}$, $\dot{m}$, $G_{sol}$, $P_{FW}$).

8. The system (1) according to claim 6 or 7, wherein said processor (CPU) of said server (8) is configured to preset the time period ($\Delta t$) used in calculating the set of optimized control parameters ($\Theta_k$) based on the number of stored data packets ($D_{O...k}$).

9. The system (1) according to at least one of claims 6 to 8, wherein said processor (CPU) of said server (8) is configured to:

determine a first deviation ($e_R$) between the actual room temperature ($T_R$) and the target room temperature ($T_{R,W}$) for each data packet ($D_{O...k}$) of a preset time period ($\Delta t$);

determine a second deviation ($e_{VL}$) between the supply temperature ($T_R$) and the preset supply temperature ($T_{VL,W}$) for each data packet ($D_{O...k}$) of the preset time period ($\Delta t$); and

determine and apply a weighting factor (w) between 0 and 1 based on the determined deviations ($e_R$, $e_{VL}$) such that, when calculating the set of optimized control parameters ($\Theta_k$), data packets ($D_{O...k}$) with low deviation are taken into account more and data packets ($D_{O...k}$) with high deviation are taken into account less; or

determine the set of optimized control parameters ($\Theta_k$) from the stored data packets ($D_{O...k}$) for which the determined first deviation ($e_R$) and/or the determined second deviation ($e_{VL}$) is/are less than or equal to a respectively preset threshold value ($\delta_R$, $\delta_{VL}$).

10. The system (1) according to at least one of claims 6 to 9, wherein the sensors detect the measurement values periodically after a preset time interval has elapsed, and said processor (CPU) of said server (8) is configured to recurrently calculate the set of optimized control parameters ($\Theta_k$) each time a predetermined plurality of preset time intervals have elapsed so that a corresponding plurality of generated data packets ($D_{O...k}$) are stored in said storage medium (6, 7) of said server (8) for calculating the set of optimized control parameters ($\Theta_k$).

**Revendications**

1. Procédé pour établir un ensemble de paramètres de régulation optimisés ($\theta_K$) d'un régulateur (3) ou d'une commande pour une installation CVCR (technique de chauffage, ventilation, climatisation et refroidissement) (2) avec les étapes suivantes consistant à :

saisir une température extérieure ($T_A$) ;
saisir une température ambiante réelle ($T_R$) d'une pièce (9) ;
saisir une température de départ ($T_{VL}$) ;
saisir une température ambiante de consigne ($T_{R,W}$) prédéfinie ;
saisir une température de départ de consigne ($T_{VL,W}$) prédéfinie ;
produire un paquet de données ($D_K$) avec lesdites températures ($T_A$, $T_R$, $T_{VL}$) saisies et températures de consigne ($T_{R,W}$, $T_{VL,W}$) prédéfinies et un instant ($t_K$) de la saisie ;
transmettre le paquet de données ($D_K$) à un serveur (8) via une liaison Internet ; et
stocker le paquet de données ($D_K$) dans un support de stockage (6, 7) relié au serveur (8),
**caractérisé par** le fait de :

calculer un ensemble de paramètres de régulation optimisés ($\theta_K$) à l'aide des valeurs mesurées ($T_A$, $T_R$, $T_{R,W}$, $T_{VL}$, $T_{VL,W}$) du paquet de données ($D_K$) transmis et stocké et à l'aide :

de valeurs mesurées ($T_A$, $T_R$, $T_{R,W}$, $T_{VL}$, $T_{VL,W}$) d'une pluralité d'autres paquets de données ($D_{0...K}$) produits en des instants antérieurs ($t_{0...K}$) d'une période ($\Delta t$) préétablie et/ou
au moins de l'un d'une pluralité d'ensembles de paramètres de régulation optimisés établis précédemment ($\theta_{K-1}$) ;

dans lequel le calcul de l'ensemble de paramètres de régulation optimisés ($\theta_K$) s'effectue en exécutant un algorithme de calcul sur le serveur (8) ;
stocker l'ensemble calculé de paramètres de régulation optimisés ($\theta_K$) dans le support de stockage (6, 7) relié au serveur (8) ; et
transmettre l'ensemble calculé de paramètres de régulation optimisés ($\theta_K$) depuis le serveur (8) vers le régulateur (3) ou la commande de l'installation CVCR (2) via la liaison Internet ou envoyer une notification avec l'ensemble calculé de paramètres de régulation optimisés ($\theta_K$) à un utilisateur (B) de l'installation CVCR (2).

**2.** Procédé selon la revendication 1, dans lequel le procédé comprend en outre le fait de :
saisir au moins une autre valeur en l'instant ($t_K$) dans le groupe :

température de retour ($T_{RL}$) ;
débit massique ($m$) ;
ensoleillement ($G_{sol}$) ;
entrée de source de chaleur extérieure ($P_{FW}$) ;
dans lequel le paquet de données ($D_K$) produit comprend la ou les autre(s) valeur(s) mesurée(s) ($T_{RL}$, m, $G_{sol}$, $P_{FW}$) et l'algorithme de calcul établit l'ensemble de paramètres de régulation optimisés ($\theta_K$) au moins à l'aide des autres valeurs mesurées ($T_{RL}$, m, $G_{sol}$, $P_{FW}$).

**3.** Procédé selon la revendication 1 ou 2, dans lequel la période ($\Delta t$) utilisée lors du calcul de l'ensemble de paramètres de régulation optimisés ($\theta_K$) est prédéfini en fonction du nombre de paquets de données ($D_{0...K}$) stockés dans le support de stockage (6, 7).

**4.** Procédé selon au moins l'une des revendications précédentes, dans lequel le calcul de l'ensemble de paramètres de régulation optimisés ($\theta_K$) comprend le fait de :

établir une première variation ($e_R$) entre la température ambiante réelle ($T_R$) et la température ambiante de consigne ($T_{R,W}$) pour chaque paquet de données ($D_{0...k}$) d'une période ($\Delta t$) prédéfinie ;
établir une seconde variation ($e_{VL}$) entre la température de départ ($T_{VL}$) et la température de départ prédéfinie ($T_{VL,W}$) pour chaque paquet de données ($D_{0...k}$) de la période ($\Delta t$) prédéfinie ; et
déterminer et utiliser un facteur de pondération entre 0 et 1 en fonction des variations ($e_R$, $e_{VL}$) établies, de sorte que lors du calcul de l'ensemble de paramètres de régulation optimisés ($\theta_K$) soient davantage pris en considération des paquets de données ($D_{0...k}$) avec une variation faible et soient moins pris en considération des paquets de données ($D_{0...k}$) avec une variation élevée ; ou
calculer l'ensemble de paramètres de régulation optimisés ($\theta_K$) depuis des paquets de données ($D_{0...k}$) stockés pour lesquels la première variation ($e_R$) établie et/ou la seconde variation ($e_{VL}$) établie est/sont inférieure(s) ou égale(s) à une valeur de seuil ($\delta_R$, $\delta_{VL}$) respectivement prédéfinie.

5. Procédé selon au moins l'une des revendications précédentes, dans lequel la saisie des valeurs mesurées est réalisée régulièrement après expiration d'un intervalle de temps prédéfini, et le calcul de l'ensemble de paramètres de régulation optimisés ($\theta_K$) est respectivement exécuté de façon récurrente dès lors qu'une pluralité prédéterminée d'intervalles de temps prédéfinis a expiré, de sorte qu'une pluralité correspondante de paquets de données ($D_{0...k}$) produits pour le calcul de l'ensemble de paramètres de régulation optimisés ($\theta_K$) soit présente de façon stockée dans le support de stockage (6, 7) du serveur (8).

6. Système (1) pour établir un ensemble de paramètres de régulation optimisés ($\theta_K$) d'un régulateur (3) ou d'une commande pour une installation CVCR (technique de chauffage, ventilation, climatisation et refroidissement) (2), comprenant :

   un capteur de température extérieure (11) pour saisir une température extérieure ($T_A$) ;
   un capteur de température ambiante (10) pour saisir une température ambiante réelle ($T_R$), qui est agencé dans une pièce (9) ;
   un capteur de température de départ (12) pour saisir une température de départ ($T_{VL}$) ;
   un dispositif (17) pour prédéfinir une température ambiante de consigne ($T_{R,W}$) ;
   un dispositif (4) pour prédéfinir une température de départ de consigne ($T_{VL,W}$) ;
   un dispositif (22) pour produire un paquet de données ($D_K$) avec lesdites températures ($T_A$, $T_R$, $T_{VL}$) saisies et températures de consigne ($T_{R,W}$, $T_{VL,W}$) prédéfinies et un instant ($t_K$) de la saisie ;
   un dispositif de transmission avec une interface (20) pour transmettre le paquet de données ($D_K$) à un serveur (8) via une liaison Internet ; et
   un support de stockage (6, 7) relié au serveur (8) pour stocker le paquet de données ($D_K$),
   **caractérisé en ce que** le serveur (8) présente un processeur (CPU) qui est configuré pour :

      calculer un ensemble de paramètres de régulation optimisés ($\theta_K$) à l'aide de valeurs mesurées ($T_A$, $T_R$, $T_{R,W}$, $T_{VL}$, $T_{VL,W}$) du paquet de données ($D_K$) transmis et stocké de l'instant ($t_K$) et à l'aide :

         de valeurs mesurées ($T_A$, $T_R$, $T_{R,W}$, $T_{VL}$, $T_{VL,W}$) d'une pluralité d'autres paquets de données ($D_{0...K-1}$) produits en des instants antérieurs ($t_{0...K-1}$) d'une période ($\Delta t$) préétablie et/ou
         au moins de l'un d'une pluralité d'ensembles de paramètres de régulation optimisés établis précédemment ($\theta_{K-1}$) ;

      dans lequel le processeur (CPU) est configuré pour exécuter un algorithme de calcul afin de calculer l'ensemble de paramètres de régulation optimisés ($\theta_K$) ;
      stocker l'ensemble calculé de paramètres de régulation optimisés ($\theta_K$) dans le support de stockage (6, 7) relié au serveur (8) ; et
      transmettre l'ensemble calculé de paramètres de régulation optimisés ($\theta_K$) vers le régulateur (3) ou la commande de l'installation CVCR (2) via une interface (21) via la liaison Internet ou envoyer une notification avec l'ensemble calculé de paramètres de régulation optimisés ($\theta_K$) à un utilisateur (B) de l'installation CVCR (2).

7. Système (1) selon la revendication 6, dans lequel le système (1) comprend en outre :

   un capteur de température de retour (15) pour établir une température de retour ($T_{RL}$) ; et/ou
   un capteur de débit massique (13) pour saisir un débit massique ($m$) ; et/ou
   un capteur d'ensoleillement (14) pour saisir un ensoleillement ($G_{sol}$) ; et/ou
   un équipement pour saisir une entrée de source de chaleur extérieure ($P_{FW}$) ; et/ou
   dans lequel le dispositif (22) pour produire un paquet de données est configuré pour produire le paquet de données ($D_K$) avec la/les autre(s) valeur (s) mesurée (s) ($T_{RL}$, $m$, $G_{sol}$, $P_{FW}$) et le processeur (CPU) est conçu pour calculer l'ensemble de paramètres de régulation optimisés ($\theta_K$) au moins à l'aide de l'une des autres valeurs mesurées ($T_{RL}$, $m$, $G_{sol}$, $P_{FW}$).

8. Système (1) selon la revendication 6 ou 7, dans lequel le processeur (CPU) du serveur (8) est configuré pour prédéfinir la période ($\Delta t$) utilisée lors du calcul de l'ensemble de paramètres de régulation optimisés ($\theta_K$) en fonction du nombre de paquets de données ($D_{0...K}$) stockés.

**9.** Système (1) selon au moins l'une des revendications 6 à 8, dans lequel le processeur (CPU) du serveur (8) est configuré pour :

établir une première variation ($e_R$) entre la température ambiante réelle ($T_R$) et la température ambiante de consigne ($T_{R,W}$) pour chaque paquet de données ($D_{0...K}$) d'une période ($\Delta t$) prédéfinie ;
établir une seconde variation ($e_{VL}$) entre la température de départ ($T_{VL}$) et la température de départ prédéfinie ($T_{VL,W}$) pour chaque paquet de données ($D_{0...K}$) de la période ($\Delta t$) prédéfinie ; et
déterminer et utiliser un facteur de pondération entre 0 et 1 en fonction des variations ($e_R$, $e_{VL}$) établies, de sorte que lors du calcul de l'ensemble de paramètres de régulation optimisés ($\theta_K$) soient davantage pris en considération des paquets de données ($D_{0...K}$) avec une variation faible et soient moins pris en considération des paquets de données ($D_{0...K}$) avec une variation élevée ; ou
établir l'ensemble de paramètres de régulation optimisés ($\theta_K$) depuis les paquets de données ($D_{0...K}$) stockés pour lesquels la première variation ($e_R$) établie et/ou la seconde variation ($e_{VL}$) établie est inférieure ou égale à une valeur de seuil ($\delta_R$, $\delta_{VL}$) respectivement prédéfinie.

**10.** Système (1) selon au moins l'une des revendications 6 à 9, dans lequel les capteurs saisissent les valeurs mesurées régulièrement après expiration d'un intervalle de temps prédéfini, et le processeur (CPU) du serveur (8) est configuré pour respectivement calculer l'ensemble de paramètres de régulation optimisés ($\theta_K$) de façon récurrente dès lors qu'une pluralité prédéterminée d'intervalles de temps prédéfinis a expiré, de sorte qu'une pluralité correspondante de paquets de données ($D_{0...K}$) produits pour le calcul de l'ensemble de paramètres de régulation optimisés ($\theta_K$) soit présente de façon stockée dans le support de stockage (6, 7) du serveur (8).

Fig. 1

Fig. 2a

Fig. 2b

**Fig. 3**

**Fig. 4**

Fig. 5a

Fig. 5b

a)

b)

Fig. 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20150032267 A1
- DE 69918379 T2

**In der Beschreibung aufgeführte Nicht-Patentliteratur**

- Stoer/Bulirsch: Numerische Mathematik. Springer Verlag, 2007, vol. 1, 25Off
- **LJUNG, L.** System Identification - Theory for the User. Prentice Hall, 1999
- **R. ISERMANN ; M. MÜNCHHOF.** Identification of Dynamic Systems. Springer, 2010